Europäisches Patentamt

European Patent Office

Office européen des brevets

(19)

(11) **EP 0 997 257 B1**

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(51) Int Cl.$^7$: **B29C 45/76**, B29C 37/00, B29C 45/42, B25J 9/16

(21) Anmeldenummer: **99118334.4**

(22) Anmeldetag: **15.09.1999**

(54) **Verfahren zum Steuern eines Bewegungsablaufs eines bewegbaren Bauteils einer Kunststoff-Spritzgiessmaschine**

Process for controlling the movement of a part of an injection moulding machine

Procédé de contrôle du déplacement d'une partie d'une machine de moulage par injection

(84) Benannte Vertragsstaaten:
**AT BE CH CY DE DK ES FI FR GB GR IE IT LI LU MC NL PT SE**

(30) Priorität: **16.10.1998 DE 19847740**

(43) Veröffentlichungstag der Anmeldung:
**03.05.2000 Patentblatt 2000/18**

(73) Patentinhaber: **HEKUMA Herbst Maschinenbau GmbH
85386 Eching (DE)**

(72) Erfinder: **Herbst, Richard
85386 Eching (DE)**

(74) Vertreter: **Klingseisen, Franz, Dipl.-Ing. et al Patentanwälte,
Dr. F. Zumstein,
Dipl.-Ing. F. Klingseisen,
Bräuhausstrasse 4
80331 München (DE)**

(56) Entgegenhaltungen:
EP-A- 0 307 091    EP-A- 0 688 655
DE-A- 4 110 948    DE-A- 4 121 841
DE-A- 19 716 777

• PATENT ABSTRACTS OF JAPAN vol. 1998, no. 10, 31. August 1998 (1998-08-31) & JP 10 119097 A (MITSUBISHI HEAVY IND LTD), 12. Mai 1998 (1998-05-12)
• PATENT ABSTRACTS OF JAPAN vol. 1997, no. 01, 31. Januar 1997 (1997-01-31) & JP 08 244076 A (YUUSHIN SEIKI:KK), 24. September 1996 (1996-09-24)
• PATENT ABSTRACTS OF JAPAN vol. 011, no. 316 (M-631), 15. Oktober 1987 (1987-10-15) & JP 62 099127 A (MITSUBISHI HEAVY IND LTD), 8. Mai 1987 (1987-05-08)

**Beschreibung**

Die vorliegende Erfindung betrifft ein Verfahren zum Steuern eines Bewegungsablaufs eines ersten bewegbaren Bauteils einer Kunststoff-Spritzgießmaschine, dessen Bewegungsbahn von der Bewegungsbahn eines zweiten bewegbaren Bauteils der Kunststoff-Spritzgießmaschine zumindest teilweise überlappt wird, wobei die Bewegung des ersten bewegbaren Bauteils in Abhängigkeit eines einen Bewegungszustand des zweiten bewegbaren Bauteils repräsentierenden Freigabesignals gestartet wird und wobei zumindest ein Zeitmaß bestimmt wird.

Die Erfindung betrifft außerdem eine Kunststoff-Spritzgießmaschine mit einem ersten und einem zweiten bewegbaren Bauteil, deren Bewegungsbahnen sich zumindest teilweise überlappen, mit einer Steuereinheit zum Erzeugen eines Freigabesignals für die Bewegung des ersten bewegbaren Bauteils in Abhängigkeit eines Bewegungszustandes des zweiten bewegbaren Bauteils und mit Mitteln zum Bestimmen wenigstens eines Zeitmaßes.

Ein derartiges Verfahren und eine derartige Kunststoff-Spritzgießmaschine sind beispielsweise aus der DE 40 03 372 C1 oder der DE 41 10 948 A1 bekannt.

In der erstgenannten Schrift sind bereits ein Verfahren und eine Vorrichtung zum Steuern der Bewegungen zweier bewegbarer Bauteile, nämlich einer Spritzgießform und eines Handlingsgerätes beschrieben. Die Spritzgießform gehört zu einer Kunststoff-Spritzgießmaschine und weist zumindest ein bewegbares Formwerkzeug auf, das eine öffnungs- und Schließbewegung ausführen kann. Das Handlinggerät, manchmal auch als Roboter bezeichnet, besitzt ein Greifwerkzeug, das bspw. zur Entnahme eines hergestellten Werkstücks zwischen zumindest zwei, in dem Fall dann geöffnete Formwerkzeuge ein- und ausfahrbar ist. Häufig sind solche Handlinggeräte eigenständige Anlagen, die eine mit der Kunststoff-Spritzgießmaschine zwar gekoppelte, jedoch eigenständige Steuerung aufweisen. Es ist jedoch auch der Fall denkbar, daß das Greifwerkzeug Bestandteil der Kunststoff-Spritzgießmaschine selbst ist.

Im folgenden wird zur Vereinfachung der Darstellung von dem letztgenannten Fall ausgegangen, ohne jedoch den Umfang der vorliegenden Erfindung dadurch auf eine derartige Ausführung zu beschränken.

Grundsätzlich besteht bei einer Kunststoff-Spritzgießmaschine das Problem, daß das Greifwerkzeug zwischen zumindest zwei Formwerkzeuge ein- und ausfahren muß, um ein hergestelltes Werkstück zu entnehmen und/oder ein Einlegeteil in den Formhohlraum einzulegen. Dies bedeutet, daß sich die Bewegungsbahnen der beiden Werkzeuge zumindest teilweise überlappen. Dementsprechend müssen die Bewegungen der beiden Werkzeuge aufeinander abgestimmt sein, um Kollisionen zu verhindern.

Die sicherste Möglichkeit, um letzteres zu erreichen, ist es, die Bewegungen jedes der beiden Werkzeuge erst dann zu starten, wenn das jeweils zweite Werkzeug die Bewegungsbahn des jeweils ersten verlassen hat. Dies hat jedoch den Nachteil, daß aufgrund der sich so ergebenden Totzeiten die Zykluszeit der Maschine sehr groß ist. Die Zykluszeit ist dabei die Zeit, die die Kunststoff-Spritzgießmaschine für einen vollständigen Arbeitsdurchgang bis zu dem Zeitpunkt benötigt, an dem sie wieder zur Herstellung des nächsten Werkstücks bereitsteht.

Aus der genannten DE 40 03 372 C1 ist es bekannt, die Bewegung des ersten Werkzeugs bereits zu einem Zeitpunkt zu starten, an dem das zweite Werkzeug die Bewegungsbahn des ersten noch nicht vollständig verlassen hat. Hierzu sind für jedes der beiden Werkzeuge jeweils zwei Sensoren vorgesehen, mit denen einerseits eine Position und andererseits über die Ermittlung eines Zeitmaßes auch die Geschwindigkeit des Werkzeugs an dieser Position bestimmbar ist. Die beiden jeweiligen Sensoren sind mit einer Steuereinheit verbunden, die ein Freigabesignal für die Bewegung des ersten Werkzeugs erzeugt, wenn das zweite Werkzeug die Position seines zweiten Sensors mit einer vorgegebenen Geschwindigkeit passiert.

Die Messung des Zeitintervalls, die das zweite Werkzeug zum Durchlaufen der Strecke zwischen den zwei ihm zugeordneten Sensoren benötigt, bietet eine Gewähr dafür, daß das Freigabesignal nur dann erzeugt wird, wenn sich das zweite Werkzeug mit einer dem Normalbetrieb entsprechenden Geschwindigkeit an einer bestimmten Position bewegt. In diesem Fall kann aufgrund der Massenträgheit davon ausgegangen werden, daß das zweite Werkzeug auch im Falle einer Störung noch mindestens eine solche Wegstrecke zurücklegt, daß es nicht zu einer Kollision kommt.

Die Optimierung der Zykluszeit einer solchen Kunststoff-Spritzgießmaschine bei gleichzeitiger Vermeidung von Kollisionen selbst im Fall einer Betriebsstörung hängt bei diesem Verfahren entscheidend von der Position des zweiten Sensors und damit von dem Zeitpunkt der Erzeugung des Freigabesignals ab. Befindet sich der zweite Sensor an einer solchen Position, daß das Freigabesignal für das erste Werkzeug zu früh erzeugt wird, so ist eine Kollision bei einer Störung des normalen Betriebsablaufs nicht vollständig ausgeschlossen.

Der ungünstigste Fall, der hierbei auftreten kann, ist, daß der Antrieb des zweiten Werkzeugs in dem Moment ausfällt, in dem das Freigabesignal für das erste Werkzeug erzeugt wird. In diesem Fall setzt sich das erste Werkzeug nämlich in Bewegung, während das zweite Werkzeug die Bewegungsbahn des ersten Werkzeugs nicht mit der im Normalbetrieb vorgegebenen Geschwindigkeit verlassen kann.

Liegt der Auslösezeitpunkt für das Freigabesignal demgegenüber zu spät, so wird die Zykluszeit der Spritzgießmaschine unnötig verlängert.

Eine Möglichkeit oder ein Verfahren, um den jeweils optimalen Auslösezeitpunkt für die Erzeugung des Freigabesignals zu bestimmen und einzustellen, ist der genannten Schrift jedoch nicht zu entnehmen.

Aus der eingangs genannten DE 41 10 948 A1 ist ein Verfahren zur Entnahme von Spritzgießartikeln aus einer Spritzgießmaschine bekannt. Auch nach diesem Verfahren soll zur Erhöhung der Taktfolge und damit zur Verkürzung der Zykluszeit der Spritzgießmaschine die Bewegung des jeweils ersten Werkzeugs zum frühestmöglichen Zeitpunkt beginnen. Dabei werden die Bewegungsabläufe der beiden Werkzeuge jeweils mit einer in einer Steuereinheit abgelegten Weg-Zeit-Funktion verglichen, um bei einer unzulässigen Abweichung des vorgegebenen Bewegungsablaufes eine Nachregelung oder eine Notabschaltung zu veranlassen. Hinsichtlich der oben genannten Optimierung ist in dieser Schrift jedoch ebenfalls nur allgemein gesagt, daß durch die Notabschaltung eine Kollision sicher vermieden werden soll. Auf welche Weise der Auslösezeitpunkt zur Erzeugung des Freigabesignals optimal bestimmt werden kann, ist auch dieser Schrift nicht zu entnehmen.

Auch aus der DE 197 16 777 A1 ist ein Verfahren bekannt, um die Kollision eines Greifwerkzeugs und eines Formwerkzeugs bei einer Kunststoffverarbeitungsmaschine zu vermeiden. Dabei beruht das Verfahren auch hier auf einer kontinuierlichen Positionserfassung der genannten bewegbaren Bauteile.

Des weiteren sind aus der EP 0 688 655 A2 sowie der EP 0 307 091 A2 Verfahren bzw. Vorrichtungen bekannt, um Kollisionen der auch vorliegend betrachteten Art zu vermeiden. Die Verfahren beruhen dabei im wesentlichen auf der Bestimmung im einzelnen genauer angegebener, räumlicher Distanzen.

Vor diesem Hintergrund ist es eine Aufgabe der vorliegenden Erfindung, ein einfaches Verfahren der eingangs genannten Art anzugeben, bei dem die Zykluszeit der Kunststoff-Spritzgießmaschine einerseits so kurz wie möglich ist und bei dem andererseits auch im ungünstigsten Fall eine Kollision der bewegbaren Bauteile vermieden ist. Es ist weiterhin Aufgabe der Erfindung, eine dementsprechende Kunststoff-Spritzgießmaschine anzugeben.

Hinsichtlich des eingangs genannten Verfahrens wird diese Aufgabe dadurch gelöst, daß ein erstes Zeitmaß und ein zweites Zeitmaß bestimmt und miteinander verglichen werden, wobei das erste Zeitmaß die Zeitspanne zwischen dem Zeitpunkt der Erzeugung des Freigabesignals und dem Zeitpunkt angibt, zu dem das erste bewegbare Bauteil die Bewegungsbahn des zweiten bewegbaren Bauteils erreicht, und wobei das zweite Zeitmaß die Zeitspanne zwischen dem Zeitpunkt der Erzeugung des Freigabesignals und dem Zeitpunkt angibt, zu dem das zweite bewegbare Bauteil die Bewegungsbahn des ersten bewegbaren Bauteils verläßt, und daß der Bewegungsablauf des ersten bewegbaren Bauteils in Abhängigkeit von dem Vergleich der beiden Zeitmaße so gesteuert wird, daß die Differenz des zweiten Zeitmaßes und des ersten Zeitmaßes kleiner als ein vorgegebener, minimaler Toleranzwert ist, wobei zumindest eines der Zeitmaße mittels eines Sensors bestimmt wird.

Die erfindungsgemäße Kunststoff-Spritzgießmaschine ist dadurch gekennzeichnet, daß ein erstes Zeitmaß eine Zeitspanne zwischen dem Zeitpunkt der Erzeugung des Freigabesignals und dem Zeitpunkt angibt, zu dem das erste bewegbare Bauteil die Bewegungsbahn des zweiten bewegbaren Bauteils erreicht, und daß ein zweites Zeitmaß eine Zeitspanne zwischen dem Zeitpunkt der Erzeugung des Freigabesignals und dem Zeitpunkt angibt, zu dem das zweite bewegbare Bauteil die Bewegungsbahn des ersten bewegbaren Bauteils verläßt, und daß ferner die Steuereinheit Mittel aufweist, um die Differenz des ersten Zeitmaßes und des zweiten Zeitmaßes zu bilden und in Abhängigkeit von der Differenz das Freigabesignal zu erzeugen, wobei die Mittel zum Bestimmen der Zeitmaße wenigstens einen Sensor beinhalten.

Der Erfinder der vorliegenden Erfindung hat nämlich erkannt, daß sich das eingangs beschriebene Problem sehr gut in Form einer zeitlichen Beziehung formulieren läßt. Er hat weiterhin erkannt, daß eine solche Formulierung sehr gut damit zusammenpaßt, daß die Optimierung der Zykluszeit der Spritzgießmaschine ebenfalls eine Problemstellung in einer zeitlichen Dimension ist. Indem der Erfinder nun die beiden in der Aufgabe genannten Bedingungen in derselben physikalischen Dimension formuliert hat, ist es ihm möglich gewesen, eine Optimierungsvorschrift in einer einzigen, gemeinsamen Bedingung niederzulegen. Basierend auf dieser Erkenntnis läßt sich eine einfache und optimale Steuerung der Bewegungsabläufe der bewegbaren Bauteile erreichen.

Für die eigentliche Steuerung der Maschine, d.h. die Beeinflussung ihrer einzelnen Bewegungsparameter gibt es, wie nachfolgend noch gezeigt wird, verschiedene Möglichkeiten. Allen ist jedoch gemeinsam, daß die Steuerung auf der Basis des Vergleichs der beiden oben angegebenen Zeitmaße basiert und dadurch optimiert wird.

Der Toleranzwert, um den das zweite Zeitmaß stets kleiner sein muß als das erste Zeitmaß, gibt auf der einen Seite an, wieviel zeitliche Reserve zwischen den Bewegungen der beiden Werkzeuge selbst im Fall einer Störung noch vorhanden ist. Andererseits ist dieser Wert ein Maß dafür, wieviel zusätzliche Totzeit in der Zykluszeit vorhanden ist. Je näher der Toleranzwert an Null liegt, desto optimaler ist das Verfahren hinsichtlich der Zykluszeit.

Der Vergleich der beiden genannten Zeitmaße kann bspw. dadurch erfolgen, daß diese in einer entsprechenden Steuereinheit der erfindungsgemäßen Kunststoff-Spritzgießmaschine per Software zueinander in Beziehung gesetzt werden. Alternativ kann der Vergleich jedoch auch dadurch stattfinden, daß über entsprechende Sensoren hardwaremäßig die Differenz zwischen den beiden Zeitmaßen bestimmt wird und sodann erst diese Differenz auf ihren Betrag und ihr Vorzeichen hin ausgewertet wird. Darüber hinaus sind jedoch auch alle anderen Möglichkeiten zur Bestimmung und Auswertung einer zeitlichen Differenz im Rahmen der vorliegenden Erfindung anwendbar. Welche dieser Alternativen jeweils die günstigere ist, hängt von den konstruktiven Gegebenheiten einer entsprechenden Kunststoff-Spritzgießmaschine ab.

Die Bestimmung der beiden zu vergleichenden Zeitmaße erfolgt einmalig nach der ersten oder jeder erneuten Inbetriebnahme der Maschine. Alternativ kann sie auch im Arbeitsbetrieb wiederholt werden.

Die Verwendung eines Sensors bei der Bestimmung zumindest eines der Zeitmaße besitzt dabei den Vorteil, daß das bestimmte Zeitmaß Veränderungen im Bewegungsablauf des entsprechenden Bauteils, bspw. aufgrund von Temperaturveränderungen oder Alterungsprozessen, berücksichtigt.

Schließlich sei an dieser Stelle angemerkt, daß unter dem Begriff Zeitmaß hier jede Größe verstanden wird, die geeignet ist, eine Zeit zu repräsentieren. Hierzu ist es nicht erforderlich, daß diese Größe tatsächlich in einer Einheit wie bspw. Sekunden oder Sekundenbruchteile bestimmt wird. Ebenso können die Zeitmaße auch eine dimensionslose Anzahl von zeitlich aufeinander folgenden gleichen oder ungleichen Impulsen sein.

Der Vorteil des erfindungsgemäßen Verfahrens ist, daß mit ihm eine Kollision der Werkzeuge selbst bei einer Betriebsstörung im ungünstigsten Zeitpunkt verhindert ist, während gleichzeitig die Zykluszeit der Maschine unter Berücksichtigung dieser Bedingung optimal kurz eingestellt ist. Darüber hinaus besitzt das Verfahren den Vorteil, daß es ohne größeren konstruktiven Aufwand an einer erfindungsgemäßen Kunststoff-Spritzgießmaschine zu realisieren ist. Dementsprechend stehen dem erreichbaren Vorteil keine nennenswerten zusätzlichen Kosten gegenüber.

Ein weiterer Vorteil der Erfindung ist, daß sich der optimale Auslösezeitpunkt für die Erzeugung des Freigabesignals sehr schnell und exakt einstellen läßt. Außerdem kann der Auslösezeitpunkt so auch rein maschinell eingestellt werden.

Durch das angegebene Verfahren und die angegebene Kunststoff-Spritzgießmaschine wird die vorstehende Aufgabe somit vollkommen gelöst.

In einer Ausgestaltung der Erfindung ist eines der bewegbaren Bauteile ein Formwerkzeug, das relativ zu einem weiteren Formwerkzeug eine Öffnungs- und Schließbewegung ausführen kann, und das andere der bewegbaren Bauteile ist ein Greifwerkzeug, das zwischen die Formwerkzeuge ein- und ausfahrbar ist.

Diese Maßnahme besitzt den Vorteil, daß das erfindungsgemäße Verfahren somit auf die beiden wesentlichen, die Funktion einer Kunststoff-Spritzgießmaschine bestimmenden Bauteile Anwendung findet. Dementsprechend kommen die zuvor genannten Vorteile des erfindungsgemäßen Verfahrens in vollem Umfang zur Geltung. Generell ist das Verfahren jedoch auch für andere bewegbaren Bauteile einer Kunststoff-Spritzgießmaschine anwendbar, deren Bewegungsbahnen sich zumindest teilweise überlappen.

Gemäß einer weiteren Ausgestaltung der Erfindung ist ein anderes der Zeitmaße als Parameter in einer Steuereinheit der Kunststoff-Spritzgießmaschine abgelegt.

Diese Maßnahme besitzt den Vorteil, daß hierdurch der Hardware-Aufwand und damit auch die Kosten einer erfindungsgemäßen Kunststoff-Spritzgießmaschine reduziert werden. Die genannte Maßnahme ist möglich aufgrund der Tatsache, daß nicht sämtliche Parameter in den Bewegungsabläufen einer Kunststoff-Spritzgießmaschine derartig wesentlichen oder schnellen Änderungen unterliegen, die eine wiederholte, jeweils aktualisierte Messung mittels eines Sensors erfordern.

In einer weiteren Ausgestaltung der zuvor genannten Maßnahmen ist das zumindest eine Zeitmaß für die Bewegung des Greifwerkzeugs repräsentativ.

Diese Maßnahme stützt sich auf den Umstand, daß das Greifwerkzeug einer Kunststoff-Spritzgießmaschine in der Regel leichter ist als das oder die bewegbaren Formwerkzeuge. Dementsprechend läßt sich das dynamische Verhalten des Greifwerkzeugs einfacher, leichter und schneller beeinflussen. Gleichzeitig unterliegen jedoch gerade dessen Bewegungen stärkeren und schnelleren Veränderungen im Betrieb einer Maschine. Die genannte Maßnahme besitzt somit den Vorteil, daß dasjenige Zeitmaß, das stärkeren und kurzfristigeren Schwankungen unterworfen ist, anhand aktuell erfaßter Betriebsparameter bestimmt wird.

In einer weiteren Ausgestaltung der zuvor genannten Maßnahmen ist das andere Zeitmaß für die Bewegung des Formwerkzeugs repräsentativ.

Diese Maßnahme knüpft an die zuvor genannten Umstände an und besitzt den Vorteil, daß Einsparungen beim Hardware-Aufwand nur dort vorgenommen werden, wo dies aufgrund der Gegebenheiten ohne spürbare nachteilige Auswirkung auf die Steuerung der Maschine möglich ist.

Insgesamt bieten die zuvor genannten Maßnahmen somit den Vorteil, einerseits den Aufwand und damit die Kosten einer Kunststoff-Spritzgießmaschine für das erfindungsgemäße Verfahren zu minimieren und andererseits gleichzeitig für eine optimale Steuerung der Betriebsabläufe zu sorgen. Die genannten Maßnahmen sind darüber hinaus besonders vorteilhaft für den Fall, daß das Greifwerkzeug nicht Bestandteil einer erfindungsgemäßen Kunststoff-Spritzgießmaschine ist, sondern als Bestandteil eines separaten Handlinggerätes an eine solche angepaßt werden muß. In diesem Fall verringert sich aufgrund der genannten Maßnahmen der Applikationsaufwand, da in die Steuerung der Spritzgießmaschine nicht über das auch bisher unbedingt notwendige Maß eingegriffen zu werden braucht.

In einer weiteren Ausgestaltung der Erfindung wird zumindest eines der Zeitmaße anhand einer Veränderung einer Beschleunigung, einer Wegstrecke und/oder einer Totzeit zumindest eines bewegbaren Bauteils eingestellt.

Diese Maßnahme besitzt den Vorteil, daß über eine Einstellung dieser Parameter die Bewegungsabläufe der bewegbaren Bauteile einfach und zuverlässig aufeinander abgestimmt werden können. Die Maßnahme ist insbesondere dann vorteilhaft, wenn über die Veränderung der genannten Größen das Zeitmaß und somit der Bewegungsablauf des Greifwerkzeugs einer Kunststoff-Spritzgießmaschine eingestellt wird, da dieses wie bereits genannt aufgrund seines geringeren Gewichtes eine höhere Flexibilität ermöglicht.

In einer weiteren Ausgestaltung der Erfindung wird das Freigabesignal erzeugt, wenn das zweite bewegbare Bauteil eine vorbestimmte Auslöseposition erreicht und die Auslöseposition wird in Abhängigkeit vom ersten und zweiten Zeitmaß eingestellt.

Diese Maßnahme besitzt den Vorteil, daß sie eine besonders einfache Steuerung ermöglicht, die allein durch Änderung in der Steuerungssoftware Änderungen der Bewegungsabläufe der bewegbaren Bauteile ermöglicht. Im einzelnen wird die Auslöseposition für die Erzeugung des Freigabesignals in Abhängigkeit des Vergleichs der beiden Zeitmaße, ggf. iterativ, in Richtung einer früheren Auslösung verschoben, um die Differenz der Zeitmaße auf den gewünschten Wert einzustellen. Je früher im Bewegungsablauf des zweiten bewegbaren Bauteils das Freigabesignal für das erste bewegbare Bauteil erzeugt wird, desto früher erreicht das erste bewegbare Bauteil die Bewegungsbahn des zweiten bewegbaren Bauteils.

In einer weiteren Ausgestaltung der Erfindung wird das zweite Zeitmaß anhand einer Simulation bestimmt, bei der ein Ausfall eines Antriebs des zweiten bewegbaren Bauteils im Zeitpunkt der Erzeugung des Freigabesignals simuliert wird.

Diese Maßnahme besitzt den Vorteil, daß damit das zweite Zeitmaß meßtechnisch für den Fall einer Störung bestimmt wird, der praktisch dem ungünstigsten Fall, d.h. dem worst case entspricht. Dementsprechend werden sämtliche individuelle Maschinentoleranzen bei dieser Bestimmung des zweiten Zeitmaßes erfaßt. Eine Kollision der bewegbaren Bauteile ist damit unter allen denkbaren Umständen zuverlässig vermieden. Andererseits läßt sich das zweite Zeitmaß auf diese Weise sehr einfach für den ungünstigsten möglichen Fall bestimmen.

Gemäß einer weiteren Ausgestaltung der Erfindung wird ein Fehlersignal erzeugt, wenn der Antrieb des zweiten bewegbaren Bauteils ausfällt und bei Vorliegen des Fehlersignals wird die Bewegung des ersten bewegbaren Bauteils gestoppt oder unterbunden.

Diese Maßnahme besitzt den Vorteil, daß hierdurch das erste Zeitmaß für den relevanten Fall einer Störung des Antriebs des zweiten bewegbaren Bauteils verlängert wird bzw. daß sogar ein sich in Bewegung Setzen des ersten bewegbaren Bauteils verhindert wird. Der letztgenannte Fall ist jedoch nur möglich, wenn das Fehlersignal bereits so früh vorliegt, daß die Bewegung des ersten bewegbaren Bauteils unter Berücksichtigung von Signallauf- und Schaltzeiten tatsächlich noch unterbunden werden kann. Liegt das Fehlersignal jedoch erst zu einem Zeitpunkt vor, an dem das erste bewegbare Bauteil bereits sein Freigabesignal erhalten hat, so läßt sich dessen Bewegung aufgrund der Signallauf- und Schaltzeiten in der Regel nicht mehr vollständig unterbinden. Wird in einem solchen Fall jedoch die Bewegung des ersten bewegbaren Bauteils verzögert, verlängert sich die Zeit, bis dieses die Bewegungsbahn des zweiten bewegbaren Bauteils erreicht. Durch die Berücksichtigung dieses Zeitgewinns läßt sich die Zykluszeit der Kunststoff-Spritzgießmaschine im störungsfreien Betrieb verringern, ohne daß im Fall einer Störung des Antriebs des zweiten Werkzeugs eine Kollision auftreten kann.

In einer weiteren Ausgestaltung der Erfindung wird ein Fehlersignal erzeugt, wenn ein Bewegungsablauf des zweiten bewegbaren Bauteils ein vorgegebenes Toleranzband verläßt, und bei Vorliegen des Fehlersignals wird die Bewegung des ersten bewegbaren Bauteils gestoppt oder unterbunden.

Diese Maßnahme besitzt die gleichen Vorteile wie die zuvor genannte Maßnahme. Sie ist besonders vorteilhaft in Ergänzung zu der zuvor genannten Maßnahme, da mit ihrer Hilfe auch Störungen im Bewegungsablauf des zweiten bewegbaren Bauteils berücksichtigt werden, die nicht auf einen Ausfall des Antriebs zurückzuführen sind.

In einer weiteren Ausgestaltung dieser Maßnahme wird das Toleranzband vor einem Betrieb der Spritzgießmaschine unter Produktionsbedingungen durch mehrfaches Durchfahren des Bewegungsablaufs empirisch bestimmt.

Diese Maßnahme besitzt den Vorteil, daß das Toleranzband Veränderungen in den tatsächlichen Bewegungsabläufen der bewegbaren Bauteile angepaßt wird. Hierdurch ist es möglich, die Breite des Toleranzbandes sehr klein zu wählen, wodurch Störungen im Betriebsablauf des zweiten bewegbaren Bauteils frühzeitiger erkannt werden.

In einer Ausgestaltung der zuvor genannten Maßnahme wird das Toleranzband unter Produktionsbedingungen in vorbestimmten Zeitabständen nachgemessen und entsprechend nachjustiert.

Diese Maßnahme besitzt den Vorteil, daß das Toleranzband auch Veränderungen der Bewegungsabläufe im Betrieb der Kunststoff-Spritzgießmaschine angepaßt wird. Hierdurch läßt sich nochmals eine Verringerung der Breite des Toleranzbandes und eine damit verbundene frühzeitige Erkennung von Fehlfunktionen erreichen.

In einer weiteren Ausgestaltung des erfindungsgemäßen Verfahrens wird die Bestimmung des zumindest einen Zeitmaßes im Verlaufe des Verfahrens wiederholt durchgeführt.

Diese Maßnahme besitzt ebenfalls den Vorteil, daß Veränderungen in den Bewegungsabläufen der bewegbaren Bauteile, bspw. aufgrund von Temperaturänderungen, stets berücksichtigt werden.

In einer weiteren Ausgestaltung des erfindungsgemäßen Verfahrens wird eine Versorgungsspannung für den Antrieb des zweiten bewegbaren Bauteils mit einem Speichermittel so gepuffert, daß der Antrieb des zweiten bewegbaren Bauteils auch bei Ausfall der Versorgungsspannung solange aufrechterhalten wird, bis das zweite bewegbare Bauteil die Bewegungsbahn des ersten bewegbaren Bauteils verlassen hat.

Diese Maßnahme besitzt den Vorteil, daß hierdurch das zweite Zeitmaß verkürzt wird, da die Bewegung des zweiten bewegbaren Bauteils auch bei Ausfall der Versorgungsspannung noch für eine gewisse Zeitspanne aufrechterhalten wird. In der Regel liegt diese Zeitspanne in der Größenordnung von 300 ms. Die Reduzierung des zweiten Zeitmaßes ermöglicht es, das erste Zeitmaß kleiner einzustellen, wodurch die Zykluszeit der Kunststoff-Spritzgießmaschine insgesamt ebenfalls kürzer wird. Die Pufferung der Versorgungsspannung wird bevorzugt durch eine Erhöhung der Kapazität im sogenannten Zwischenkreis, das ist ein Gleichrichter-Schaltungsteil zur Glättung einer wechselförmigen Netzspannung, erreicht.

Der Ausfall der Spannungsversorgung für den Antrieb eines bewegbaren Bauteils ist bei gattungsgemäßen Kunststoff-Spritzgießmaschinen eine der häufigsten Fehlerursachen. Ursache hierfür können bspw. elektromagnetische Störungen im Umfeld der Spritzgießmaschine sein.

In einer weiteren Ausgestaltung des erfindungsgemäßen Verfahrens wird das erste bewegbare Bauteil im Fall einer Störung im Bewegungsablauf des zweiten bewegbaren Bauteils mit maximaler Verzögerung gebremst.

Diese Maßnahme gewinnt ihre Bedeutung daraus, daß die bewegbaren Bauteile normalerweise geregelt verzögert werden. Diese Regelung muß demnach abgeschaltet oder übersteuert werden. Die Maßnahme besitzt den Vorteil, daß hierdurch das erste Zeitmaß im Fall einer Betriebsstörung dynamisch vergrößert wird. Hierdurch ist es möglich, das erste Zeitmaß im störungsfreien Betrieb kleiner zu bemessen, wodurch wiederum die Zykluszeit der Maschine verkürzt wird. Aufgrund der dynamischen Vergrößerung des ersten Zeitmaßes im Störfall ist jedoch gleichzeitig sichergestellt, daß eine Kollision der bewegbaren Bauteile vermieden wird.

In einer weiteren Ausgestaltung wird das erste bewegbare Bauteil im störungsfreien Arbeitsbetrieb mit einem ersten Bremsmittel gebremst und es wird im Fall einer Störung mit Hilfe eines zusätzlichen Bremsmittels mit einer gegenüber dem Arbeitsbetrieb stärkeren Verzögerung abgebremst.

Zum Abbremsen kann direkt auf den Antrieb eingewirkt werden. Gemäß einer ersten Alternative ist es aber auch möglich, eine externe Bremse vorzusehen, bspw. eine Backenbremse. Nach einer weiteren Alternative kann auch ein Stoßfänger eingesetzt werden, in dem Bewegungsenergie in Verformung umgesetzt wird. Derartige Stoßfänger sind z.B. als Pralltöpfe ausgebildet und stehen als Standardteile des Automobilbaus zur Verfügung.

Diese Maßnahme besitzt den Vorteil, daß hierdurch eine höhere maximale Bremskraft aufgebracht werden kann, als dies im störungsfreien Arbeitsbetrieb der Spritzgießmaschine erforderlich ist. Durch die erhöhte Bremskraft im Fall einer Störung wird, wie zuvor dargelegt, das erste Zeitmaß dynamisch vergrößert. In einer weiteren vorteilhaften Ausgestaltung dieser Maßnahme wird die Regelung der Verzögerung des ersten bewegbaren Bauteils abgeschaltet, um zu verhindern, daß diese Regelung der Erzeugung einer maximalen Bremskraft entgegenwirkt. Hierdurch wird sichergestellt, daß das erste Zeitmaß im Fall einer Störung auf ein maximal mögliches Maß ausgedehnt wird. Der hierdurch erzielte Gewinn an zeitlicher Sicherheitsreserve wird vorteilhafterweise im störungsfreien Arbeitsbetrieb der Spritzgießmaschine zur Reduzierung der Zykluszeit berücksichtigt.

In einer weiteren Ausgestaltung des erfindungsgemäßen Verfahrens wird das erste bewegbare Bauteil nach Erhalt des Freigabesignals zunächst mit einer geringeren Beschleunigung beschleunigt und es wird nach dem Passieren eines letztmöglichen kollisionsfreien Anhaltepunktes zumindest bis zum Eintritt in die Bewegungsbahn des zweiten bewegbaren Bauteils mit maximaler Beschleunigung beschleunigt.

Durch diese Maßnahme wird erreicht, daß der kritische Raumbereich, innerhalb dem das erste bewegbare Bauteil nicht mehr rechtzeitig zur Verhinderung einer Kollision angehalten werden kann, soweit wie möglich verkürzt wird. Solange das erste bewegbare Bauteil den letztmöglichen kollisionsfreien Anhaltepunkt noch nicht passiert hat, kann es bei Auftreten einer Störung im Bewegungsablauf des zweiten bewegbaren Bauteils noch vor dem Eintritt in dessen Bewegungsbahn angehalten werden. Hierdurch wird eine Kollision unabhängig von der Stellung des zweiten bewegbaren Bauteils zuverlässig vermieden.

Nach dem Passieren des letztmöglichen kollisionsfreien Anhaltepunktes kann das erste bewegbare Bauteil jedoch nicht mehr vor Eintritt in die Bewegungsbahn des zweiten bewegbaren Bauteils angehalten werden. Der denkbar ungünstigste Fall für das Auftreten einer Störung im Antrieb des zweiten bewegbaren Bauteils ist somit der Moment, in dem das erste bewegbare Bauteil den letztmöglichen kollisionsfreien Anhaltepunkt passiert. Bei einer vor diesem Zeitpunkt auftretenden Störung wird das erste bewegbare Bauteil aufgrund des in diesem Fall erzeugten Notstopsignals rechtzeitig angehalten. Bei einer zu einem späteren Zeitpunkt auftretenden Störung hat sich das zweite bewegbare Bauteil demgegenüber schon weiter aus der Bewegungsbahn des ersten bewegbaren Bauteils entfernt. Die vorstehend genannte Maßnahme besitzt den Vorteil, daß der Zeitraum zwischen der Erzeugung des Freigabesignals und dem Passieren des letztmöglichen kollisionsfreien Anhaltepunktes soweit wie möglich ausgedehnt wird, während der Zeitraum nach Passieren des letztmöglichen Anhaltepunktes soweit wie möglich verkürzt wird. Die auf diese Weise verkürzte kritische Zeitdauer ermöglicht es, die Zykluszeiten der Spritzgießmaschine im störungsfreien Betrieb zu verkürzen. In einer Ausgestaltung dieser Maßnahme wird die Zeitdauer seit dem Passieren des letztmöglichen kollisionsfreien Anhaltepunktes zur Steuerung der Bewegungsabläufe verwendet.

In einer weiteren Ausgestaltung des erfindungsgemäßen Verfahrens verläuft die Bewegungsbahn eines der bewegbaren Bauteile in etwa vertikal, wobei dieses bewegbare Bauteil von oben in die Bewegungsbahn des anderen bewegbaren Bauteils einfährt, und im Fall einer Störung wird das zuerst genannte Bauteil mit einem Haltemittel gegen ein Herabfallen gesichert.

Diese Maßnahme ist insbesondere dann von Bedeutung, wenn durch den Ausfall der Versorgungsspannung das vertikal von oben einfahrende Bauteil seine Fixierung gegenüber der Schwerkraft verliert. Die Maßnahme besitzt somit den Vorteil, daß auch unter diesen Bedingungen eine Kollision der beiden bewegbaren Bauteile zuverlässig verhindert wird.

Schließlich kann bevorzugt eine gemeinsame Steuereinheit für beide bewegbare Bauteile vorgesehen sein, in der die Bewegungsabläufe beider Bauteile unmittelbar verglichen werden und im Falle einer Störung ein Störsignal erzeugt wird.

Diese Maßnahme hat den Vorteil, daß infolge der durch den Vergleich bewirkten Synchronisierung der Bewegungsabläufe im Falle einer Störung auf kürzestmöglichem Wege Abhilfe geschaffen werden kann, indem z.B. eine Notbremsung oder Abschaltung ausgelöst wird. Die auftretenden Totzeiten werden auf diese Weise minimiert.

Nachfolgend werden Ausführungsbeispiele der Erfindung anhand einer Zeichnung erläutert. Es zeigen:

Fig. 1    eine schematische Darstellung einer erfindungsgemäßen Kunststoff-Spritzgießmaschine mit einem sich zu Beginn der Öffnungsbewegung befindenden Formwerkzeug und einem sich zu Beginn der Einfahrbewegung befindenden Greifwerkzeug,

Fig. 2    die Kunststoff-Spritzgießmaschine aus Fig. 1 mit einem sich zu Beginn der Schließbewegung befindenden Formwerkzeug und einem sich zu Beginn der Ausfahrbewegung befindenden Greifwerkzeug,

Fig. 3    ein Weg-Zeit-Diagramm, das den Bewegungsablauf des Formwerkzeugs aus Fig. 1 darstellt,

Fig. 4    ein Weg-Zeit-Diagramm, das den Bewegungsablauf des Greifwerkzeugs aus Fig. 1 darstellt,

Fig. 5    ein Flußdiagramm zur Erläuterung des erfindungsgemäßen Verfahrens beim Einfahren des Greifwerkzeugs in die Bewegungsbahn des Formwerkzeugs,

Fig. 6    ein Flußdiagramm zur Erläuterung des erfindungsgemäßen Verfahrens beim Ausfahren des Greifwerkzeugs aus der Bewegungsbahn des Formwerkzeugs und

Fig. 7    den Verlauf der Geschwindigkeit des Greifwerkzeugs vor und nach dem Eintritt in die Bewegungsbahn des Formwerkzeugs.

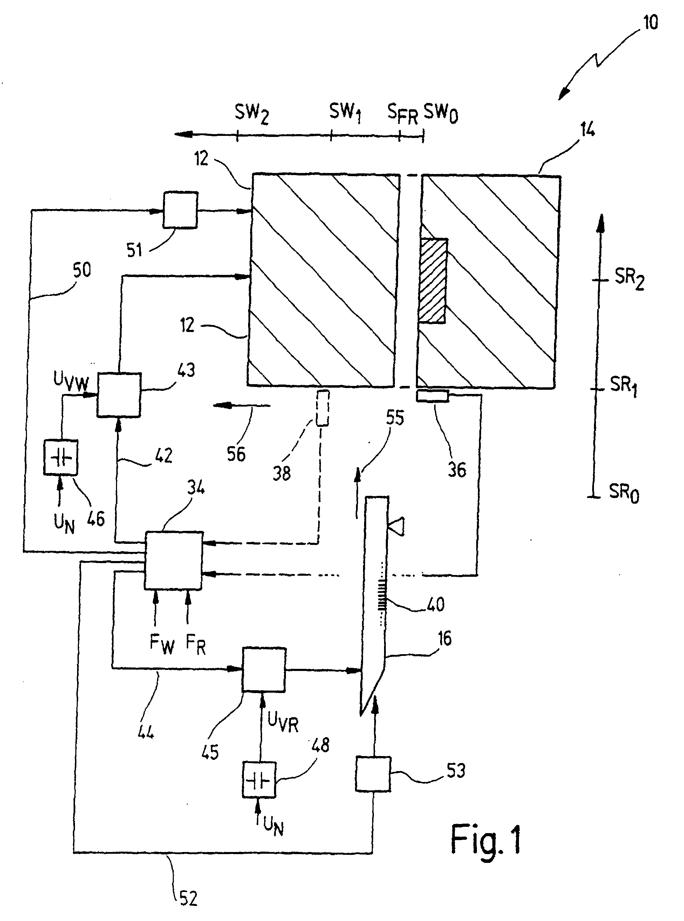

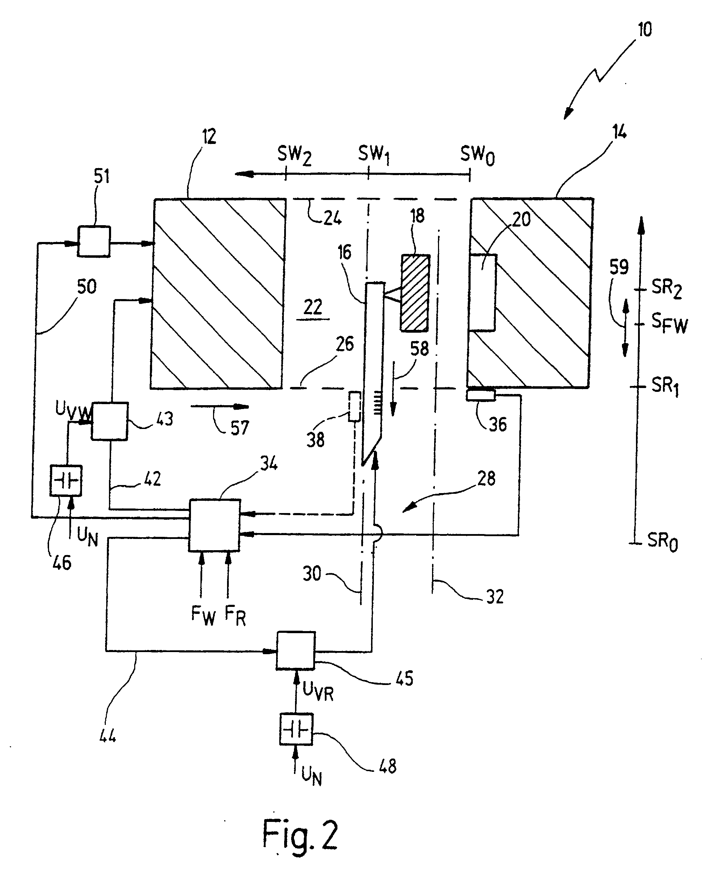

In den Fig. 1 und 2 ist eine erfindungsgemäße Kunststoff-Spritzgießmaschine in ihrer Gesamtheit mit der Bezugsziffer 10 bezeichnet.

Die Kunststoff-Spritzgießmaschine 10 weist ein erstes bewegbares Bauteil auf, welches hier aus einem bewegbaren Formwerkzeug 12 sowie einem feststehenden Formwerkzeug 14 besteht. Dieses Ausführungsbeispiel ist zur Vereinfachung der Darstellung gewählt und schließt andere Ausführungsbeispiele mit mehreren bewegbaren Formwerkzeugen, insbesondere Etagenwerkzeugen nicht aus.

Mit der Bezugsziffer 16 ist ein zweites bewegbares Bauteil bezeichnet, und zwar ein Greifwerkzeug, das wie in der Fig. 2 gezeigt zur Entnahme eines Werkstücks 18 aus einem Hohlraum 20 des Formwerkzeugs 14 in einen Bereich zwischen den Formwerkzeugen 12 und 14 einfahrbar ist.

Mit der Bezugsziffer 22 ist in Fig. 2 die Bewegungsbahn des bewegbaren Formwerkzeugs 12 bezeichnet, die durch die Linien 24 und 26 begrenzt wird. Die Bewegungsbahn 22 des Formwerkzeugs 12 wird teilweise von der Bewegungsbahn 28 des Greifwerkzeugs 16 überlappt, die in der Fig. 2 anhand der Linien 30 und 32 angedeutet ist.

Insbesondere die Darstellung der Bewegungsbahn 28 des Greifwerkzeugs 16 ist hier nur beispielhaft zu verstehen, da sich dessen linearer Ein- bzw. Ausfahrbewegung weitere Bewegungen, die zur Entnahme des Werkstücks 18 erforderlich sind, überlagern können.

Mit der Bezugsziffer 34 ist eine Steuereinheit bezeichnet, der die Signale eines Sensors 36 und eines optional vorgesehenen und dementsprechend nur gestrichelt angedeuteten Sensors 38 zugeführt sind. Der Sensor 36 ist an einer Position $SR_1$ angeordnet, die der Position entspricht, an der das Greifwerkzeug 16 die Bewegungsbahn 22 des Formwerkzeugs 12 erreicht bzw. verläßt. Der optional vorgesehene Sensor 38 ist an einer Position $SW_1$ angeordnet, die der Position entspricht, an der das FormWerkzeug 12 die Bewegungsbahn 28 des Greifwerkzeugs 16 erreicht bzw. verläßt. Der Sensor 36 ist im vorliegenden Fall geeignet, Markierungen 40, die auf dem Greifwerkzeug 16 angebracht sind, inkremental abzulesen, woraus die Steuereinheit 34 die jeweils aktuelle Position des Greifwerkzeugs 16 und dessen Geschwindigkeit bestimmen kann. Entsprechend ausgelegt ist auch der Sensor 38.

Ausgehend von der Steuereinheit 34 ist ein Steuersignal 42 einer Antriebseinheit 43 des bewegbaren Formwerkzeugs 12 und ein Steuersignal 44 einer Antriebseinheit 45 des Greifwerkzeugs 16 zugeführt. Mittels der Antriebseinheiten 43 und 45 werden das Formwerkzeug 12 und das Greifwerkzeug 16 beschleunigt und verzögert. Dementsprechend beinhalten die Steuersignale 42 und 44 einerseits Freigabesignale für die Bewegung des jeweiligen Werkzeugs und andererseits Notstopsignale.

Die Antriebseinheiten 43 und 45 benötigen jeweils eine Versorgungsspannung, die im Fall der Antriebseinheit 43 mit $U_{VW}$ und im Fall der Antriebseinheit 45 mit $U_{VR}$ bezeichnet ist. Die Versorgungsspannungen $U_{VW}$ und $U_{VR}$ sind bei bekannten Kunststoff-Spritzgießmaschinen üblicherweise Gleichspannungen, die durch Gleichrichtung einer wechselförmigen Netzspannung $U_N$ erzeugt werden. Dies geschieht üblicherweise im sogenannten Zwischenkreis.

Bei der hier dargestellten Kunststoff-Spritzgießmaschine 10 enthalten die jeweiligen Zwischenkreise zusätzliche oder in ihrer Kapazität vergrößerte Speichermittel 46 und 48. Die Speichermittel 46 und 48 dienen zur Pufferung der Versorgungsspannungen $U_{VW}$ bzw. $U_{VR}$, um so die Bewegung der jeweiligen Werkzeuge auch bei Ausfall der Versorgungsspannung zumindest eine gewisse Zeitspanne lang weiter aufrechterhalten zu können. Bei der hier dargestellten Kunststoff-Spritzgießmaschine liegt diese Zeitspanne in der Größenordnung von 300 ms.

Ausgehend von der Steuereinheit 34 ist ein weiteres Steuersignal 50 einem zusätzlichen Bremsmittel 51 und ein weiteres Steuersignal 52 einem zusätzlichen Bremsmittel 53 zugeführt. Das zusätzliche Bremsmittel 51 wirkt auf das Formwerkzeug 12 und dient dazu, dieses bei Vorliegen einer Störung im Bewegungsablauf des Greifwerkzeugs 16 mit maximaler Verzögerung abzubremsen. Das zusätzliche Bremsmittel 53 dient umgekehrt dazu, das Greifwerkzeug 16 im Fall einer Störung im Bewegungsablauf des Formwerkzeugs 12 mit maximaler Verzögerung abzubremsen. Die zusätzlichen Bremsmittel 51 und 53 werden bei der Kunststoff-Spritzgießmaschine 10 in Ergänzung zu der Bremswirkung der jeweiligen Antriebseinheiten 43 und 45 verwendet, um jeweils eine maximale Verzögerung zu erreichen. Das zusätzliche Steuersignal 52 und das zusätzliche Bremsmittel 53 sind aus Gründen der Übersichtlichkeit nur in der Fig. 1 dargestellt.

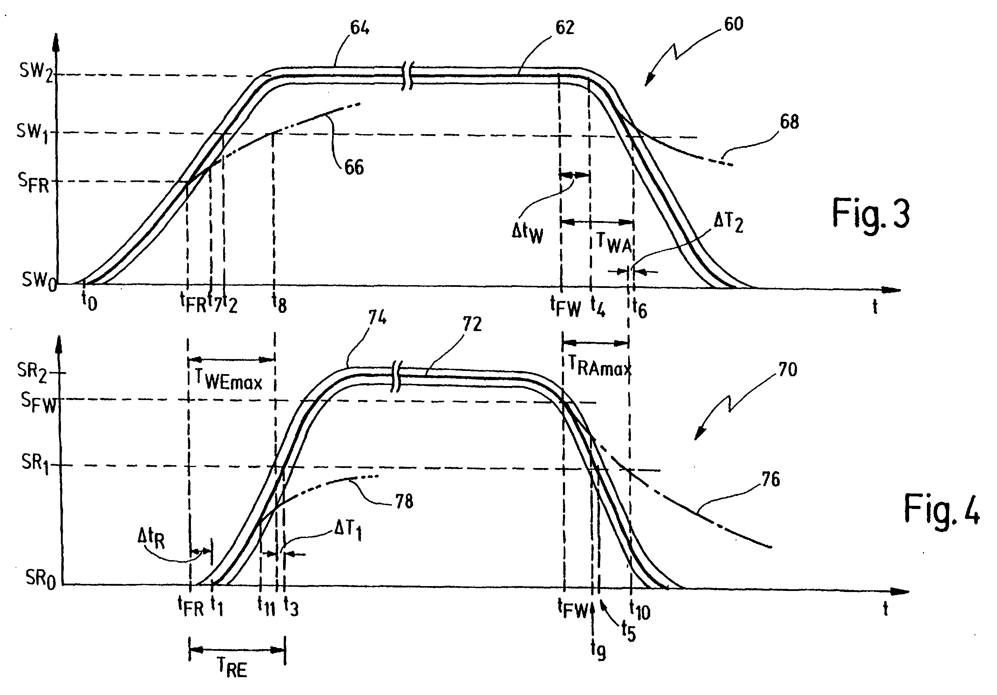

Zur nachfolgenden Erläuterung der Bewegungsabläufe sind weiterhin zwei Koordinatenachsen SR und SW eingezeichnet, deren eingezeichnete Positionen denen in den Weg-Zeit-Diagrammen der Fig. 3 und 4 entsprechen.

In der in Fig. 1 dargestellten Situation beginnt das Greifwerkzeug 16 seine Bewegung in Richtung des Pfeils 55. Das hierzu erforderliche Freigabesignal 44 wird in dem Zeitpunkt erzeugt, in dem das Formwerkzeug 12 in Richtung des Pfeils 56 die Auslöseposition $S_{FR}$ passiert. In Fig. 2 ist der umgekehrte Fall dargestellt, bei dem sich das Formwerkzeug 12 in Richtung des Pfeils 57 in Bewegung setzt, sobald es ein Freigabesignal 42 erhält. Dieses wird erzeugt, wenn das Greifwerkzeug 16 in Richtung des Pfeils 58 die Auslöseposition $S_{FW}$ passiert.

Mit dem Pfeil 59 ist angedeutet, daß die Auslöseposition $S_{FW}$ softwaremäßig innerhalb der Steuereinheit 34 veränderbar ist, um so den Auslösezeitpunkt für die Erzeugung des Freigabesignals 42 zu verändern.

Der Bewegungsablauf des Formwerkzeugs 12 ist hier vollständig als Parameter in der Steuereinheit 34 abgelegt und die Steuerung des Bewegungsablaufs des Greifwerkzeugs 16 erfolgt in Abhängigkeit der Parameterdaten durch Veränderung der Beschleunigung des Auslösepunktes $S_{FW}$ und/oder der Totzeiten des Greifwerkzeugs 16.

Zusätzlich erhält die Steuereinheit 34 Fehlersignale $F_W$ und $F_R$ von hier nicht dargestellten Überwachungsschaltungen, die erzeugt werden, wenn eine Störung im Bewegungsablauf des jeweiligen Werkzeugs 12 und 16 festgestellt wird. Eine mögliche Quelle zur Erzeugung dieser Fehlersignale sind Spannungsüberwachungsschaltungen, die die Versorgungsspannungen $U_{VW}$ und $U_{VR}$ überwachen.

In Fig. 3 ist ein Weg-Zeit-Diagramm für den Bewegungsablauf des bewegbaren Formwerkzeugs 12 in seiner Gesamtheit mit der Bezugsziffer 60 bezeichnet. Ausgehend von der Position $SW_0$ verläuft die Kurve 62 zunächst monoton ansteigend bis zur Position $SW_2$. Dieser erste Teil der Kurve 62 beschreibt die Öffnungsbewegung des Formwerkzeugs 12. Daran anschließend verläuft die Kurve 62 ausgehend von der Position $SW_2$ zunächst konstant waagerecht und sodann monoton abfallend wieder zurück zur Position $SW_0$. Dieser abfallende hintere Teil der Kurve 62 beschreibt die Schließbewegung des Formwerkzeugs 12.

Mit der Bezugsziffer 64 ist ein Toleranzband bezeichnet, innerhalb dessen die Kurve 62 bei einem störungsfreien Betrieb des Formwerkzeugs 12 verläuft. Ein Verlassen des Toleranzbandes 64 bedeutet, daß eine Störung im Bewegungsablauf des Formwerkzeugs 12 vorliegt. Ein solcher Fall ist mit dem Verlauf 66 angedeutet.

Der Verlauf 68 beschreibt einen Bewegungsablauf, bei dem das bewegbare Formwerkzeug 12 aufgrund einer Störung im Antrieb des Greifwerkzeugs 16 ein Notstopsignal erhält und dementsprechend abgebremst wird.

In Fig. 4 ist ein Weg-Zeit-Diagramm zur Beschreibung des Bewegungsablaufs des Greifwerkzeugs 16 in seiner Gesamtheit mit der Bezugsziffer 70 bezeichnet. Dabei verläuft die Kurve 72 ausgehend von einer Position $SR_0$ zunächst monoton ansteigend bis zu einer Position $SR_2$. Dieser erste Teil der Kurve 72 beschreibt die Einfahrbewegung des Greifwerkzeugs 16 zwischen die Formwerkzeuge 12 und 14. Im Anschluß daran verläuft die Kurve 72 ausgehend von der Position $SR_2$ zunächst konstant waagerecht und sodann monoton abfallend wieder zur Position $SR_0$. Der abfallende hintere Teil der Kurve 72 beschreibt die Ausfahrbewegung des Greifwerkzeugs 16 aus dem Bereich zwischen den Formwerkzeugen 12 und 14. Mit der Bezugsziffer 74 ist ein Toleranzband bezeichnet, innerhalb dessen die Kurve 72 bei einem störungsfreien Betrieb des Greifwerkzeugs 16 verläuft. Ein Verlassen des Toleranzbandes 74, wie dies mit dem Verlauf 76 dargestellt ist, deutet wiederum auf eine Störung des Bewegungsablaufs hin. Mit dem Verlauf 78 ist wiederum der Fall dargestellt, bei dem das Greifwerkzeug 16 aufgrund eines Notstopsignals abgebremst bzw. gestoppt wird.

Nachfolgend wird anhand der Weg-Zeit-Diagramme 60 und 70 zunächst ein störungsfreier Bewegungsablauf des Formwerkzeugs 12 und des Greifwerkzeugs 16 beschrieben.

Der Bewegungsablauf beginnt zum Zeitpunkt $t_0$ damit, daß sich das Formwerkzeug 12 in Richtung des Pfeils 56 in Bewegung setzt. Zu dem Zeitpunkt, in dem das Formwerkzeug 12 die Position $S_{FR}$ erreicht, wird das Freigabesignal 44 für das Greifwerkzeug 16 erzeugt. Dabei werden von der Steuereinheit 34 weitere Größen wie bspw. das Vorliegen des Fehlersignals $F_W$ und ggf. auch die Geschwindigkeit des Formwerkzeugs 12 zum Zeitpunkt $t_{FR}$ berücksichtigt. Das Erreichen der Position $S_{FR}$ wird entweder mit Hilfe des Sensors 38 detektiert oder aus dem bekannten Bewegungsablauf des Formwerkzeugs 12 abgeleitet. Aufgrund des Freigabesignals 44 setzt sich das Greifwerzeug 16 in Richtung des Pfeils 55 in Bewegung, wobei hier eine durch Signallaufzeiten und Schaltzeiten bedingte Totzeit $\Delta t_R$ berücksichtigt ist.

Das Formwerkzeug 12 erreicht zum Zeitpunkt $t_2$ die Position $SW_1$, an der es die Bewegungsbahn 28 des Greifwerkzeugs 16 verläßt. Zu diesem Zeitpunkt befindet sich das Greifwerkzeug 16 noch vor der Position $SR_1$.

Das Greifwerkzeug 16 passiert die Position $SR_1$ zum Zeitpunkt $t_3$ und tritt damit in die Bewegungsbahn 22 des Formwerkzeugs 12 ein. Der Zeitpunkt $t_3$ liegt nach dem Zeitpunkt $t_2$. Dementsprechend erfolgt keine Kollision der beiden Werkzeuge 12 und 16.

Im weiteren Verlauf bewegt sich das Formwerkzeug 12 in seine geöffnete Endposition $SW_2$ und das Greifwerkzeug 16 in seine Greifposition $SR_2$. Hier nimmt das Greifwerkzeug 16 ein hergestelltes Werkstück 18 auf und beginnt anschließend seine Ausfahrbewegung.

Zum Zeitpunkt $t_{FW}$ passiert das Greifwerkzeug 16 die Auslöseposition $S_{FW}$, was mit Hilfe des Sensors 36 detektiert wird. Die Steuereinheit 34 erzeugt daraufhin unter Berücksichtigung weiterer Größen wie des Vorliegens des Fehlersignals $F_R$ und der Geschwindigkeit des Greifwerkzeugs an dieser Position das Freigabesignal 42 für das Formwerkzeug 12. Dieses setzt sich nach Ablauf einer systeminternen Totzeit $\Delta t_W$, die wiederum durch Signallaufzeiten und Schaltverzögerungen bedingt ist, zum Zeitpunkt $t_4$ in Bewegung. Zum Zeitpunkt $t_5$ passiert das Greifwerkzeug 16 die Position $SR_1$ und verläßt damit die Bewegungsbahn 22 des Formwerkzeugs 12. Dieses wiederum passiert zum Zeitpunkt $t_6$ die Position $SW_1$ und tritt damit in die Bewegungsbahn 28 des Greifwerkzeugs 16 ein. Da der Zeitpunkt $t_6$ nach dem Zeitpunkt $t_5$ liegt, tritt eine Kollision auch in diesem Fall nicht auf.

Kritisch sind die Bewegungsabläufe der beiden Werkzeuge jedoch bei Auftreten einer Störung, wobei der worst case dann anzunehmen ist, wenn das jeweilige Freigabesignal erzeugt wird und in etwa gleichzeitig der Antrieb desjenigen Werkzeugs, das den Weg freimachen muß, ausfällt. In diesem Fall wird nämlich einerseits das Freigabesignal erzeugt und andererseits hat das in seinem Antrieb gestörte Werkzeug noch eine maximale Wegstrecke zurückzulegen. Ein solcher Fall ist für das Einfahren des Greifwerkzeugs 16 in den Bereich zwischen den Formwerkzeugen 12 und 14 anhand des Verlaufs 66 dargestellt, der im Zeitpunkt $t_{FR}$ die Kurve 62 mit einer geringeren Steigung als diese verläßt. Die geringere Steigung des Verlaufs 66 entspricht einer geringeren Geschwindigkeit des Formwerkzeugs 12, das sich bei einem Ausfall des Antriebs nur noch aufgrund seiner Trägheit weiter bewegt.

Wenn der Ausfall des Antriebs nicht bereits aufgrund des Fehlersignals $F_W$ detektiert worden ist, so kann er von der Steuereinheit 34 mit Hilfe des Sensors 38 im Zeitpunkt $t_7$ festgestellt werden, in dem der Verlauf 66 das Toleranzband 64 verläßt. Zu diesem Zeitpunkt hat sich jedoch das Greifwerkzeug 16 aufgrund des Freigabesignals 44 bereits in Bewegung gesetzt. Im Zeitpunkt $t_8$ erreicht das Formwerkzeug 12 aufgrund seiner Trägheit die Position $SW_1$, an der es die Bewegungsbahn 28 des Greifwerkzeugs verläßt.

Erfindungsgemäß erfolgt die Steuerung des Greifwerkzeugs 16 nun stets so, daß der Zeitpunkt $t_8$ um einen Toleranzwert $\Delta T_1$ vor dem Zeitpunkt $t_3$ liegt, zu dem das Greifwerkzeug 16 in die Bewegungsbahn 22 des Formwerkzeugs 12 eintritt. Dadurch ist selbst im ungünstigsten Fall einer Störung des Antriebs des Formwerkzeugs 12 eine Kollision der beiden Werkzeuge 12, 16 verhindert.

Eine vergleichbare Situation zeigen die Kurven 62 und 72 beim Ausfahren des Greifwerkzeugs 16.

Der Verlauf 76 deutet eine Störung des Antriebs des Greifwerkzeugs 16 im Zeitpunkt $t_{FW}$ an. Der Verlauf 76 weist eine geringere Steigung auf, die wiederum einer geringeren Geschwindigkeit entspricht. Im Zeitpunkt $t_9$ verläßt der Verlauf 76 das Toleranzband 74, was mit Hilfe des Sensors 36 von der Steuereinheit 34 detektiert werden kann. Da das Greifwerkzeug 16 aufgrund seiner Trägheit die Position $SR_1$ selbst in diesem angenommenen Fall im Zeitpunkt $t_{10}$ passiert, ist eine Kollision verhindert, wenn der Zeitpunkt $t_{10}$ um einen Toleranzwert $\Delta T_2$ vor dem Zeitpunkt $t_6$ liegt, in dem das Formwerkzeug 12 die Position $SW_1$ passiert und somit in die Bewegungsbahn 28 des Greifwerkzeugs 16 eintritt.

Wie anhand der Verläufe 68 und 78 dargestellt ist, vergrößern sich die Toleranzwerte $\Delta T_1$ und $\Delta T_2$ in dem Fall, daß das jeweils gesteuerte Werkzeug nach der Detektion einer Störung gebremst und damit verzögert wird. Im Fall des Verlaufs 78 ist dabei sogar angenommen, daß das Greifwerkzeug 16 so stark verzögert wird, daß es die Position $SR_1$ gar nicht mehr erreicht und somit die Bewegungsbahn 22 des Formwerkzeugs 12 gar nicht mehr betritt. Die aufgrund des Notstops und der damit verbundenen Verzögerung gewonnene Zeit kann bei der Steuerung der Werkzeuge dahingehend ausgenutzt werden, die Toleranzwerte $\Delta T_1$ und $\Delta T_2$ zu verringern, um so die Zykluszeit der Maschine im Normalbetrieb zu verbessern.

Zur Durchführung des erfindungsgemäßen Verfahrens wird zumindest jeweils eines der nachfolgenden Zeitmaße bestimmt:

$$T_{WEmax} = t_8 - t_{FR}$$

oder

$$T_{RE} = t_3 - t_{FR}$$

bzw.

$$T_{RAmax} = t_{10} - t_{FW}$$

oder

$$T_{WA} = t_6 - t_{FW}.$$

Das jeweils nicht bestimmte andere Zeitmaß ist bevorzugt als Parameter im Speicher der Steuereinheit 34 abgelegt. Besonders bevorzugt sind dies die Zeitmaße, die den Bewegungsablauf des Formwerkzeugs 12 repräsentieren. Anhand eines Vergleichs der Zeitmaße $T_{RE}$ und $T_{WEmax}$ bzw. $T_{RAmax}$ und $T_{WA}$ läßt sich die optimale Einstellung der Bewegungsabläufe überprüfen.

In bevorzugter Weise wird eine gemeinsame Steuereinheit 34 für beide bewegbare Bauteile 12, 16 vorgesehen, in der die Bewegungsabläufe beider Bauteile 12, 16 unmittelbar verglichen werden und im Falle einer Störung ein Störsignal erzeugt wird. Dann werden das Formwerkzeug 12 und das Greifwerkzeug 16 synchron gesteuert, und das Auftreten eines Fehlers kann sofort, d.h. mit minimaler Totzeit in ein Störsignal umgesetzt werden. Auf diese Weise werden also die Verläufe 66 und 78 unmittelbar miteinander verglichen bzw. der Verlauf 78 unmittelbar dem Verlauf 66 nachgeführt. Die Zeitdifferenz zwischen $t_7$ und $t_{11}$ wird dann minimal.

Es darf an dieser Stelle erwähnt werden, daß im Falle einer Notbremsung z.B. des Greifwerkzeuges 16 auch eine externe Bremse, z.B. eine Reibungsbremse eingesetzt werden kann, um mit maximaler Verzögerung abzubremsen. Alternativ kann auch ein Stoßfänger eingesetzt werden, um im Falle eines Zusammenstoßes die Bewegungsenergie des Greifwerkzeuges in Verformungsenergie umzusetzen und auf diese Weise Beschädigungen zu vermeiden. Der Stoßfänger kann z.B. ein Pralltopf sein, wie man ihn zum Einbau in Lenksäulen von Kraftfahrzeugen kennt.

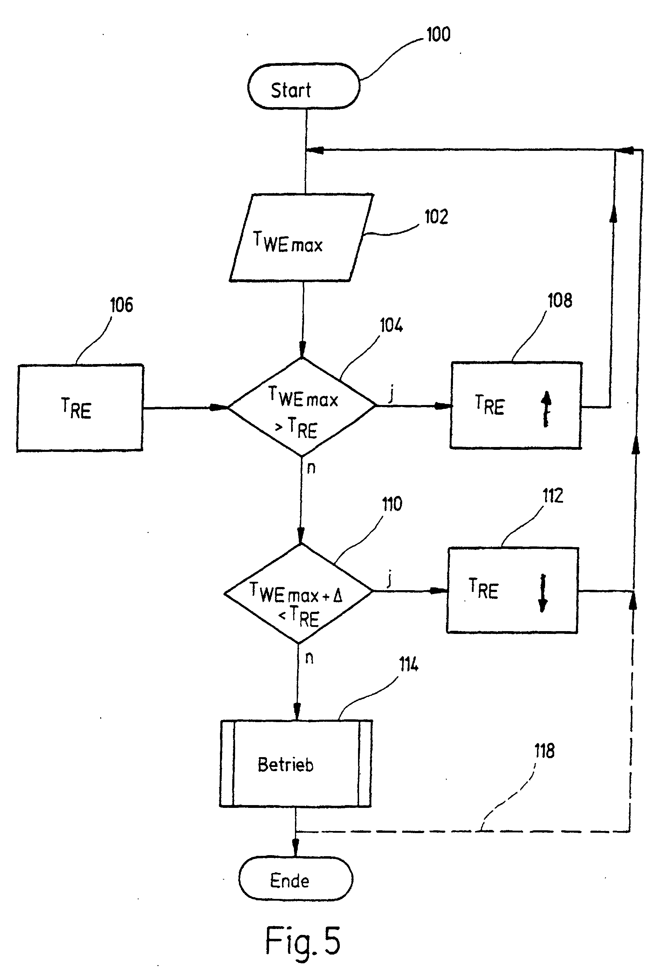

In dem Flußdiagramm der Fig. 5 ist das erfindungsgemäße Verfahren in bezug auf das Einfahren des Greifwerkzeugs 16 in den Bereich zwischen den Formwerkzeugen 12 und 14 dargestellt. Im Anschluß an den Startschritt 100 wird im Schritt 102 das Zeitmaß $T_{WEmax}$ bestimmt. Hierzu wird beim Einrichten der Maschine zumindest einmal das Formwerkzeug 12 in Richtung des Pfeils 56 aufgefahren, wobei zu dem Zeitpunkt, an dem das Formwerkzeug 12 die Position $S_{FR}$ passiert, dessen Antrieb abgeschaltet wird. Dies kann einfach durch Betätigen des Notausschalters geschehen. Sodann wird die Zeit gemessen, bis das Formwerkzeug 12 die Position $SW_1$ erreicht. Im Schritt 104 wird das Zeitmaß $T_{WEmax}$ mit dem Zeitmaß $T_{RE}$ verglichen, das gemäß Schritt 106 entweder als Parameter aus theoretischen Überlegungen oder als Meßwert in der Steuereinheit 34 abgelegt ist. Für den Fall, daß das Zeitmaß $T_{WEmax}$ größer ist als das Zeitmaß $T_{RE}$, werden gemäß Schritt 108 Maßnahmen ergriffen, um das Zeitmaß $T_{RE}$ zu vergrößern. Dies kann dadurch geschehen, daß die Auslöseposition $S_{FR}$ in Richtung der Endstellung $SW_2$ verschoben wird oder auch dadurch, daß die Totzeit $\Delta t_R$ oder die zurückzulegende Wegstrecke des Greifwerkzeugs 16 verlängert wird.

Sobald das Zeitmaß $T_{RE}$ aufgrund dieser Maßnahmen größer ist als das Zeitmaß $T_{WEmax}$, erfolgt in den Schritten 110 und 112 die Einstellung des Zeitmaßes $T_{RE}$ dahingehend, daß dieses nur um einen vorbestimmten Toleranzwert $\Delta T_1$ größer als das Zeitmaß $T_{WEmax}$ ist. Je kleiner der Toleranzwert $\Delta T_1$ ist, desto geringer ist die Zykluszeit der Kunststoff-Spritzgießmaschine.

Gemäß Schritt 114 erfolgt im Anschluß an diese Einstellung der Bewegungsabläufe der normale Betrieb der Kunststoff-Spritzgießmaschine. Gemäß Schritt 118 wird die zuvor beschriebene Einstellung der Bewegungsabläufe optional mehrfach im Betrieb der Maschine wiederholt.

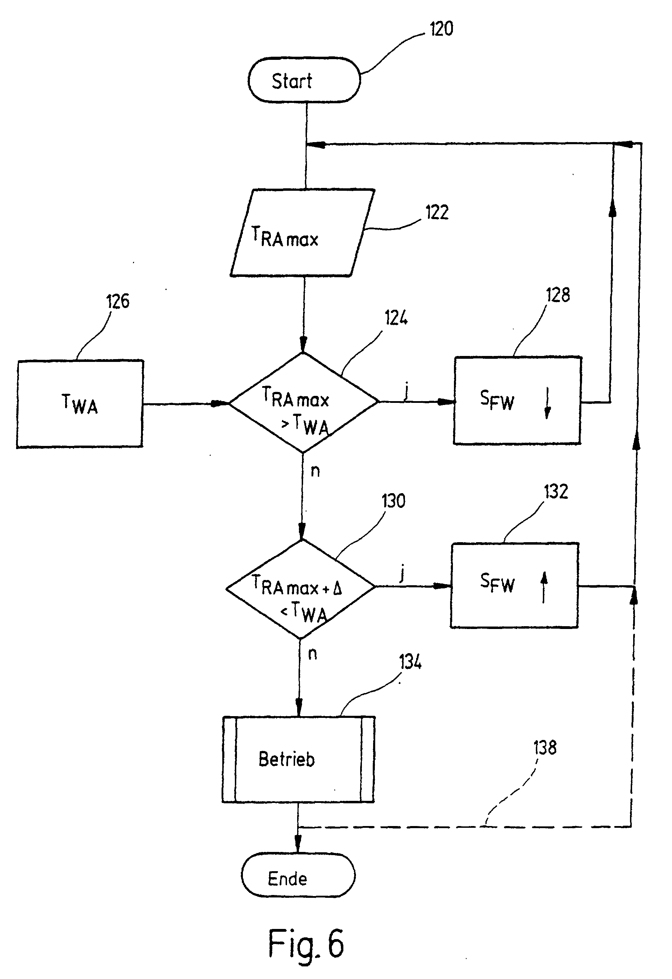

Das Flußdiagramm in Fig. 6 beschreibt den analogen Verfahrensablauf für den Fall, daß das Greifwerkzeug 16 aus dem Bereich zwischen den Formwerkzeugen 12 und 14 ausfährt.

Nach dem Startschritt 120 wird in Schritt 122 auf vergleichbare Weise wie zuvor beschrieben das Zeitmaß $T_{RAmax}$ bestimmt. In den Schritten 124 und 126 erfolgt sodann der Vergleich des bestimmten Zeitmaßes $T_{RAmax}$ mit dem Zeitmaß $T_{WA}$, welches wiederum entweder anhand theoretischer Berechnungen oder anhand einer Messung bestimmt wird. Gemäß Schritt 128 wird dann die Auslöseposition $S_{FW}$ in Richtung der ausgefahrenen Endstellung $SR_0$ verschoben, wenn das Zeitmaß $T_{RAmax}$ größer ist als das Zeitmaß $T_{WA}$. Wie im vorhergehenden Fall können jedoch auch andere Parameter des Bewegungsablaufs verändert werden.

In den Schritten 130 und 132 wird anschließend das Zeitmaß $T_{WA}$ durch Verschieben der Auslöseposition $S_{FW}$ so eingestellt, daß dieses nur um den Toleranzwert $\Delta T_2$ größer als das Zeitmaß $T_{RAmax}$ ist. Gemäß Schritt 134 erfolgt sodann der normale Betrieb der Kunststoff-Spritzgießmaschine, der gemäß Schritt 138 wiederum optional mit einer im Betrieb der Maschine stattfindenden Überprüfung der Einstellung verbunden werden kann.

Wie anhand der vorstehenden Beschreibung deutlich wird, läßt sich das erfindungsgemäße Verfahren gleichermaßen zur Steuerung des Greifwerkzeugs 16 wie auch des bewegbaren Formwerkzeugs 12 verwenden. Bei bekannten Kunststoff-Spritzgießmaschinen besitzt jedoch das Greifwerkzeug 16 in der Regel eine geringere Masse als das bewegbare Formwerkzeug 12. Dementsprechend ist das Greifwerkzeug 16 schneller und flexibler zu steuern. Darüber hinaus liegt häufig der Fall vor, daß das Greifwerkzeug 16 als Bestandteil eines eigenen Handlinggerätes an einen vorgegebenen Bewegungsablauf eines bewegbaren Formwerkzeugs angepaßt werden muß. Dies hat zur Folge, daß die Steuerung häufig nur einen geringen oder keinen Einfluß auf die Zeitmaße nehmen kann, die den Bewegungsablauf des Formwerkzeugs 12 repräsentieren. Da jedoch die zeitliche Bedingung

$$T_{RE} > T_{WEmax}$$

zur Vermeidung einer Kollision stets erfüllt sein muß, kann eine Optimierung der Zykluszeit dann nur durch eine geeignete Steuerung des Greifwerkzeugs 16 erfolgen.

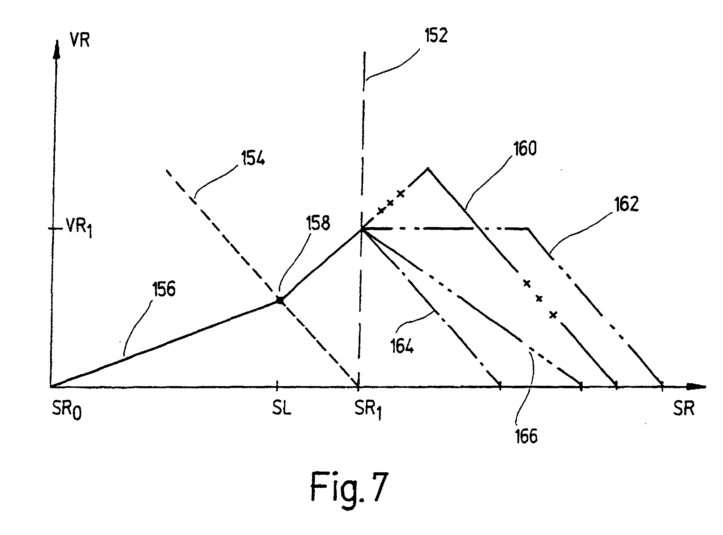

In Fig. 7 ist hierzu beispielhaft ein Geschwindigkeitsverlauf des Greifwerkzeugs 16 beim Einfahren zwischen die Formwerkzeuge 12 und 14 dargestellt. Zur Orientierung bezeichnet die Gerade 152 die Position $SR_1$, an der das Greifwerkzeug 16 in den Bereich zwischen den Formwerkzeugen 12 und 14 einfährt. Mit 154 ist eine Hilfsgerade bezeichnet, deren negative Steigung ein Maß für die maximal mögliche Verzögerung des Greifwerkzeugs 16 ist. Der Geschwindigkeitsverlauf des Greifwerkzeugs 16 vor dem Einfahren in die Bewegungsbahn 22 des Formwerkzeugs 12 ist mit 156 bezeichnet. Der Verlauf 156 schneidet die Gerade 154 im Punkt 158, der auf der Abszisse der Position SL entspricht. Diese Stelle ist die letztmögliche, kollisionsfreie Anhalteposition für das Greifwerkzeug 16, die unabhängig von der Position und Bewegung des Formwerkzeugs 12 ist. Nach dem Passieren der Position SL kann eine Kollision der Werkzeuge nur durch eine Koordinierung ihrer beiden jeweiligen Bewegungsabläufe verhindert werden.

Der ungünstigste Fall beim Einfahren des Greifwerkzeugs 16 zwischen die Formwerkzeuge 12 und 14 ist nun derjenige, daß der Antrieb des sich öffnenden Formwerkzeugs 12 in dem Moment ausfällt, in dem das Greifwerkzeug 16 die letztmögliche kollisionsfreie Auslöseposition SL passiert. Bei einem früheren Ausfall des Antriebs des Formwerkzeugs 12 kann das Greifwerkzeug 16 nämlich wie eben dargelegt vor dem Eintritt in die Bewegungsbahn des Formwerkzeugs 12 angehalten werden. Bei einem späteren Ausfall des Antriebs des Formwerkzeugs 12 ist dies zwar nicht mehr möglich, jedoch ist das Formwerkzeug 12 aufgrund seine eigenen Bewegung bereits weiter aus der Bewegungsbahn des Greifwerkzeugs 16 als in dem genannten ungünstigsten Fall.

Entsprechend dem hier dargestellten, bevorzugten Geschwindigkeitsverlauf für die Steuerung des Greifwerkzeugs 16 wird der Bereich zwischen der letztmöglichen kollisionsfreien Auslöseposition SL und der Position $SR_1$ von dem Greifwerkzeug 16 mit maximal möglicher Beschleunigung durchfahren. Dies hat zur Folge, daß die Verweildauer des Greifwerkzeugs 16 in diesem Bereich verringert wird. Der weitere Verlauf des Greifwerkzeugs 16 nach dem Passieren der Position $SR_1$ spielt für das erfindungsgemäße Verfahren keine Rolle und kann dementsprechend unterschiedlich gestaltet sein. Er hängt insbesondere von der Greifposition $SR_2$ ab, an der das Greifwerkzeug 16 zur Entnahme eines hergestellten Werkstücks 18 zum Stillstand gebracht werden muß. Verschiedene mögliche Verläufe sind mit den Bezugsziffern 160, 162, 164 und 166 bezeichnet.

Durch die Minimierung der Verweildauer des Greifwerkzeugs 16 in dem Bereich zwischen der letztmöglichen Anhalteposition SL und der Position $SR_1$ läßt sich die Zykluszeit der Spritzgießmaschine im Rahmen der vorliegenden Erfindung minimieren, ohne daß hierdurch die Gefahr einer Kollision im Fall einer Störung gegeben ist. Ebenso trägt die Aufrechterhaltung der Bewegung desjenigen Werkzeugs, das die Bewegungsbahn freiräumen muß, im Fall einer Störung zur Minimierung der Zykluszeit bei. Gleiches gilt für die Verzögerung des jeweils einfahrenden Werkzeugs im Fall einer Störung.

**Patentansprüche**

1. Verfahren zum Steuern eines Bewegungsablaufs eines ersten bewegbaren Bauteils (12; 16) einer Kunststoff-Spritzgießmaschine (10), dessen Bewegungsbahn (22; 28) von der Bewegungsbahn (28; 22) eines zweiten bewegbaren Bauteils (16; 12) der Kunststoff-Spritzgießmaschine (10) zumindest teilweise überlappt wird, wobei die Bewegung des ersten bewegbaren Bauteils (12; 16) in Abhängigkeit eines einen Bewegungszustand des zweiten bewegbaren Bauteils (16; 12) repräsentierenden Freigabesignals (42; 44) gestartet wird, wobei zumindest ein Zeitmaß bestimmt wird, **dadurch gekennzeichnet, daß** ein erstes Zeitmaß ($T_{WA}$; $T_{RE}$) und ein zweites Zeitmaß ($T_{RAmax}$; $T_{WEmax}$) bestimmt und miteinander verglichen werden (124, 130; 104, 110), wobei das erste Zeitmaß ($T_{WA}$; $T_{RE}$) die Zeitspanne zwischen dem Zeitpunkt ($t_{FW}$; $t_{FR}$) der Erzeugung des Freigabesignals und dem Zeitpunkt ($t_6$; $t_3$) angibt, zu dem das erste bewegbare Bauteil (12; 16) die Bewegungsbahn (28; 22) des zweiten bewegbaren Bauteils (16; 12) erreicht, wobei das zweite Zeitmaß ($T_{RAmax}$; $T_{WEmax}$) die Zeitspanne zwischen dem Zeitpunkt der Erzeugung ($t_{FW}$; $t_{FR}$) des Freigabesignals und dem Zeitpunkt ($t_{10}$; $t_8$) angibt, zu dem das zweite bewegbare Bauteil (16; 12) die Bewegungsbahn (22; 28) des ersten bewegbaren Bauteils (12; 16) verläßt, und wobei das Freigabesignal (42; 44) in dem Zeitpunkt ($t_{FW}$; $t_{FR}$) erzeugt wird, in dem das zweite bewegbare Bauteil (16; 12) eine Auslöseposition ($S_{FW}$, $S_{FR}$) passiert, und daß der Bewegungsablauf (62; 72) des ersten bewegbaren Bauteils (12; 16) in Abhängigkeit von dem Vergleich der beiden Zeitmaße ($T_{WA}$, $T_{RAmax}$; $T_{RE}$, $T_{WEmax}$) so gesteuert wird, daß die Differenz des zweiten Zeitmaßes ($T_{RAmax}$; $T_{WEmax}$) und des ersten Zeitmaßes ($T_{WA}$; $T_{RE}$) kleiner als ein vorgegebener, minimaler Toleranzwert ($\Delta T_2$; $\Delta T_1$) ist, wobei zumindest eines der Zeitmaße ($T_{WA}$, $T_{RAmax}$; $T_{RE}$, $T_{WEmax}$) mittels eines Sensors (36, 38) bestimmt wird.

2. Verfahren nach Anspruch 1, **dadurch gekennzeichnet, daß** eines der bewegbaren Bauteile (12, 16) ein Formwerkzeug (12) ist, das relativ zu einem weiteren Formwerkzeug (14) eine Öffnungs- und Schließbewegung (56, 57) ausführen kann, und daß das andere der bewegbaren Bauteile (12, 16) ein Greifwerkzeug (16) ist, das zwischen die Formwerkzeuge (12, 14) ein- und ausfahrbar (55, 58) ist.

3. Verfahren nach Anspruch 2, **dadurch gekennzeichnet, daß** das zumindest eine Zeitmaß ($T_{RAmax}$; $T_{RE}$) für die Bewegung des Greifwerkzeugs (16) repräsentativ ist.

4. Verfahren nach einem der Ansprüche 1 bis 3, **da-** durch gekennzeichnet, **daß** ein anderes der Zeitmaße ($T_{WA}$; $T_{WEmax}$) als Parameter in einer Steuereinheit (34) der Kunststoff-Spritzgießmaschine (10) abgelegt ist.

5. Verfahren nach Anspruch 4, **dadurch gekennzeichnet, daß** das andere Zeitmaß ($T_{WA}$; $T_{WEmax}$) für die Bewegung des Formwerkzeugs (12) repräsentativ ist.

6. Verfahren nach einem oder mehreren der Ansprüche 1 bis 5, **dadurch gekennzeichnet, daß** zumindest eines der Zeitmaße ($T_{RAmax}$; $T_{RE}$) anhand einer Veränderung einer Beschleunigung, einer Wegstrecke und/oder einer Totzeit ($\Delta t_R$) zumindest eines bewegbaren Bauteils (12, 16) eingestellt wird (108, 112).

7. Verfahren nach einem oder mehreren der Ansprüche 1 bis 6, **dadurch gekennzeichnet, daß** das Freigabesignal (42; 44) erzeugt wird, wenn das zweite bewegbare Bauteil (16; 12) eine vorbestimmte Auslöseposition ($S_{FW}$; $S_{FR}$) erreicht und daß die Auslöseposition in Abhängigkeit vom ersten ($T_{WA}$; $T_{RE}$) und zweiten ($T_{RAmax}$; $T_{WEmax}$) Zeitmaß eingestellt wird.

8. Verfahren nach einem oder mehreren der Ansprüche 1 bis 7, **dadurch gekennzeichnet, daß** das zweite Zeitmaß ($T_{RAmax}$; $T_{WEmax}$) anhand einer Simulation bestimmt wird (122; 102), bei der ein Ausfall eines Antriebs des zweiten bewegbaren Bauteils (16; 12) im Zeitpunkt ($t_{FW}$; $t_{FR}$) der Erzeugung des Freigabesignals (42; 44) simuliert wird (76; 66).

9. Verfahren nach einem oder mehreren der Ansprüche 1 bis 8, **dadurch gekennzeichnet, daß** ein Fehlersignal ($F_R$; $F_W$) erzeugt wird, wenn der Antrieb (45; 43) des zweiten bewegbaren Bauteils (16; 12) ausfällt und daß bei Vorliegen des Fehlersignals ($F_R$; $F_W$) die Bewegung des ersten bewegbaren Bauteils (12; 16) gestoppt oder unterbunden wird (78; 68).

10. Verfahren nach einem oder mehreren der Ansprüche 1 bis 9, **dadurch gekennzeichnet, daß** ein Fehlersignal ($F_R$; $F_W$) erzeugt wird, wenn ein Bewegungsablauf (76; 66) des zweiten bewegbaren Bauteils (16; 12) ein vorgegebenes Toleranzband (74; 64) verläßt und daß bei Vorliegen des Fehlersignals ($F_R$; $F_W$) die Bewegung des ersten bewegbaren Bauteils (12; 16) gestoppt oder unterbunden wird (78; 68).

11. Verfahren nach Anspruch 10, **dadurch gekennzeichnet, daß** das Toleranzband (74; 64) vor einem Betrieb der Spritzgießmaschine (10) unter Produktionsbedingungen durch mehrfaches Durchfahren des Bewegungsablaufs empirisch bestimmt wird.

**12.** Verfahren nach Anspruch 11, **dadurch gekennzeichnet, daß** das Toleranzband (74; 64) unter Produktionsbedingungen in vorbestimmten Zeitabständen nachgemessen und entsprechend nachjustiert wird.

**13.** Verfahren nach einem oder mehreren der Ansprüche 1 bis 12, **dadurch gekennzeichnet, daß** die Bestimmung (102; 122) des zumindest einen Zeitmaßes ($T_{WA}$, $T_{RAmax}$; $T_{RE}$, $T_{WEmax}$) im Verlauf des Verfahrens wiederholt durchgeführt wird (118; 138).

**14.** Verfahren nach einem oder mehreren der Ansprüche 1 bis 13, **dadurch gekennzeichnet, daß** eine Versorgungsspannung ($U_V$) für den Antrieb des zweiten bewegbaren Bauteils (16; 12) mit einem Speichermittel (48; 46) so gepuffert wird, daß der Antrieb des zweiten bewegbaren Bauteils (16; 12) auch bei Ausfall der Versorgungsspannung ($U_V$) so lange aufrechterhalten wird, bis das zweite bewegbare Bauteil (16; 12) die Bewegungsbahn (22; 28) des ersten bewegbaren Bauteils (12; 16) verlassen hat.

**15.** Verfahren nach einem oder mehreren der Ansprüche 1 bis 14, **dadurch gekennzeichnet, daß** das erste bewegbare Bauteil (12; 16) im Fall einer Störung im Bewegungsablauf des zweiten bewegbaren Bauteils (16; 12) mit maximaler Verzögerung gebremst wird.

**16.** Verfahren nach einem oder mehreren der Ansprüche 1 bis 15, **dadurch gekennzeichnet, daß** das erste bewegbare Bauteil (12; 16) im störungsfreien Arbeitsbetrieb mit einem ersten Bremsmittel (43; 45) gebremst wird und daß es im Fall einer Störung mit Hilfe eines zusätzlichen Bremsmittels (53; 51) mit einer gegenüber dem Arbeitsbetrieb stärkeren Verzögerung abgebremst wird.

**17.** Verfahren nach einem oder mehreren der Ansprüche 1 bis 16, **dadurch gekennzeichnet, daß** das erste bewegbare Bauteil (12; 16) nach Erhalt des Freigabesignals (42; 44) zunächst mit einer geringeren Beschleunigung beschleunigt wird und nach dem Passieren eines letztmöglichen kollisionsfreien Anhaltepunktes (SL) zumindest bis zum Eintritt in die Bewegungsbahn des zweiten bewegbaren Bauteils (16; 12) mit maximaler Beschleunigung beschleunigt wird.

**18.** Verfahren nach einem oder mehreren der Ansprüche 1 bis 17, **dadurch gekennzeichnet, daß** die Bewegungsbahn (22; 28) eines der bewegbaren Bauteile (12; 16) in etwa vertikal verläuft, wobei dieses bewegbare Bauteil (12; 16) von oben in die Bewegungsbahn (22; 28) des anderen Bauteils (16; 12) einfährt, und daß dieses Bauteil (12; 16) im Fall einer Störung mit einem Haltemittel gegen ein Herabfallen gesichert wird.

**19.** Verfahren nach einem oder mehreren der Ansprüche 1 bis 18, **dadurch gekennzeichnet, daß** eine gemeinsame Steuereinheit (34) für beide bewegbare Bauteile (12, 16) vorgesehen ist, in der die Bewegungsabläufe beider Bauteile (12, 16) unmittelbar verglichen werden und im Falle einer Störung ein Störsignal erzeugt wird.

**20.** Kunststoff-Spritzgießmaschine mit einem ersten und einem zweiten bewegbaren Bauteil (12, 16), deren Bewegungsbahnen (22, 28) sich zumindest teilweise überlappen, mit einer Steuereinheit (34) zum Erzeugen eines Freigabesignals (42, 44) für die Bewegung des ersten bewegbaren Bauteils (12, 16) in Abhängigkeit eines Bewegungszustandes des zweiten bewegbaren Bauteils (16, 12) und mit Mitteln (34, 36, 38) zum Bestimmen wenigstens eines Zeitmaßes ($T_{WA}$, $T_{RAmax}$; $T_{RE}$, $T_{WEmax}$), **dadurch gekennzeichnet, daß** ein erstes Zeitmaß ($T_{WA}$; $T_{RE}$) eine Zeitspanne zwischen dem Zeitpunkt ($t_{FW}$; $t_{FR}$) der Erzeugung des Freigabesignals und dem Zeitpunkt ($t_6$; $t_3$) angibt, zu dem das erste bewegbare Bauteil (12; 16) die Bewegungsbahn (28; 22) des zweiten bewegbaren Bauteils (16; 12) erreicht, daß ein zweites Zeitmaß ($T_{RAmax}$; $T_{WEmax}$) eine Zeitspanne zwischen dem Zeitpunkt ($t_{FW}$; $t_{FR}$) der Erzeugung des Freigabesignals und dem Zeitpunkt ($t_{10}$; $t_8$) angibt, zu dem das zweite bewegbare Bauteil (16; 12) die Bewegungsbahn (22; 28) des ersten bewegbaren Bauteils (12; 16) verläßt, wobei das Freigabesignal (42; 44) in dem Zeitpunkt ($t_{FW}$; $t_{FR}$) erzeugt wird in dem das zweite bewegbare Bauteil (16; 12) eine Auslöseposition ($S_{FW}$, $S_{FR}$) passiert und daß ferner die Steuereinheit (34) Mittel aufweist, um die Differenz des ersten Zeitmaßes ($T_{WA}$; $T_{RE}$) und des zweiten Zeitmaßes ($T_{RAmax}$; $T_{WEmax}$) zu bilden und in Abhängigkeit von der Differenz das Freigabesignal (42; 44) zu erzeugen, wobei die Mittel zum Bestimmen der Zeitmaße ($T_{WA}$, $T_{RA\,max}$; $T_{RE}$, $T_{WEmax}$.) wenigstens einen Sensor (36, 38) beinhalten.

**21.** Maschine nach Anspruch 20, **dadurch gekennzeichnet, daß** zum Bremsen im Falle einer Störung eine externe Bremse verwendet wird.

**22.** Maschine nach Anspruch 21, **dadurch gekennzeichnet, daß** die externe Bremse eine Reibungsbremse ist.

**23.** Maschine nach Anspruch 21, **dadurch gekennzeichnet, daß** die externe Bremse ein Stoßfänger ist.

## Claims

1. Method of controlling a sequence of movements of a first movable component (12; 16) of a plastics injection-moulding machine (10), the path of movement (22; 28) of which is at least partially overlapped by the path of movement (28; 22) of a second movable component (16; 12) of the plastics injection-moulding machine (10), the movement of the first movable component (12; 16) being started in dependence on a release signal (42; 44) representing a state of movement of the second movable component (16; 12), with at least one measure of time being determined, **characterized in that** a first measure of time ($T_{WA}$; $T_{RE}$) and a second measure of time ($T_{RAmax}$; $T_{WEmax}$) are determined and compared with each other (124, 130; 104, 110), the first measure of time ($T_{WA}$; $T_{RE}$) indicating the time period between the point in time ($t_{FW}$; $t_{FR}$) of the generation of the release signal and the point in time ($t_6$; $t_3$) at which the first movable component (12; 16) reaches the path of movement (28; 22) of the second movable component (16; 12), the second measure of time ($T_{RAmax}$; $T_{WEmax}$) indicating the time period between the point in time ($t_{FW}$; $t_{FR}$) of the generation of the release signal and the point in time ($t_{10}$; $t_8$) at which the second movable component (16; 12) leaves the path of movement (22; 28) of the first movable component (12; 16), and the release signal (42; 44) being generated at the point in time ($t_{FW}$; $t_{FR}$) at which the second movable component (16; 12) passes a triggering position ($S_{FW}$, $S_{FR}$), and **in that** the sequence of movements (62; 72) of the first movable component (12; 16) is controlled in dependence on the comparison of the two measures of time ($T_{WA}$, $T_{RAmax}$; $T_{RE}$, $T_{WEmax}$) in such a way that the difference between the second measure of time ($T_{RAmax}$; $T_{WEmax}$) and the first measure of time ($T_{WA}$; $T_{RE}$) is less than a predetermined, minimum tolerance value ($\Delta T_2$; $\Delta T_1$), with at least one of the measures of time ($T_{WA}$, $T_{RAmax}$; $T_{RE}$, $T_{WEmax}$) being determined by means of a sensor (36, 38).

2. Method according to Claim 1, **characterized in that** one of the movable components (12, 16) is a mould (12), which can perform an opening and closing movement (56, 57) in relation to a further mould (14), and **in that** the other of the movable components (12, 16) is a gripping tool (16), which can be moved in and out (55, 58) between the moulds (12, 14).

3. Method according to Claim 2, **characterized in that** at least one measure of time ($T_{RAmax}$; $T_{RE}$) is representative of the movement of the gripping tool (16).

4. Method according to one of Claims 1 to 3, **characterized in that** another of the measures of time ($T_{WA}$; $T_{WEmax}$) is stored as a parameter in a control unit (34) of the plastics injection-moulding machine (10).

5. Method according to Claim 4, **characterized in that** the other measure of time ($T_{WA}$; $T_{WEmax}$) is representative of the movement of the mould (12).

6. Method according to one or more of Claims 1 to 5, **characterized in that** at least one of the measures of time ($T_{RAmax}$; $T_{RE}$) is set (108, 112) on the basis of a change of acceleration, a distance covered and/or a dead time ($\Delta t_R$) of at least one movable component (12, 16).

7. Method according to one or more of Claims 1 to 6, **characterized in that** the release signal (42; 44) is generated when the second movable component (16; 12) reaches a predetermined triggering position ($S_{FW}$; $S_{FR}$) and **in that** the triggering position is set in dependence on the first measure of time ($T_{WA}$; $T_{RE}$) and the second measure of time ($T_{RAmax}$; $T_{WEmax}$).

8. Method according to one or more of Claims 1 to 7, **characterized in that** the second measure of time ($T_{RAmax}$; $T_{WEmax}$) is determined (122; 102) on the basis of a simulation, in which a failure of a drive of the second movable component (16; 12) at the point in time ($t_{FW}$; $t_{FR}$) of the generation of the release signal (42; 44) is simulated (76; 66).

9. Method according to one or more of Claims 1 to 8, **characterized in that** a fault signal ($F_R$; $F_W$) is generated when the drive (45; 43) of the second movable component (16; 12) fails and **in that**, in the presence of the fault signal ($F_R$; $F_W$), the movement of the first movable component (12; 16) is stopped or prevented (78; 68).

10. Method according to one or more of Claims 1 to 9, **characterized in that** a fault signal ($F_R$; $F_W$) is generated when a sequence of movements (76; 66) of the second movable component (16; 12) leaves a predetermined tolerance band (74; 64) and **in that**, in the presence of the fault signal ($F_R$; $F_W$), the movement of the first movable component (12; 16) is stopped or prevented (78; 68).

11. Method according to Claim 10, **characterized in that** the tolerance band (74; 64) is empirically determined under production conditions by running several times through the sequence of movements before operation of the injection-moulding machine (10).

**12.** Method according to Claim 11, **characterized in that** the tolerance band (74; 64) is remeasured, and appropriately readjusted, under production conditions at predetermined time intervals.

**13.** Method according to one or more of Claims 1 to 12, **characterized in that** the determination (102; 122) of the at least one measure of time ($T_{WA}$, $T_{RAmax}$; $T_{RE}$, $T_{WEmax}$) is carried out (118; 138) repeatedly in the course of the method.

**14.** Method according to one or more of Claims 1 to 13, **characterized in that** a supply voltage ($U_V$) for the drive of the second movable component (16; 12) is buffered by a storage means (48; 46) in such a way that the drive of the second movable component (16; 12) is maintained even in the event of failure of the supply voltage ($U_V$) until the second movable component (16; 12) has left the path of movement (22; 28) of the first movable component (12; 16).

**15.** Method according to one or more of Claims 1 to 14, **characterized in that**, in the event of a disturbance in the sequence of movements of the second movable component (16; 12), the first movable component (12; 16) is braked with maximum deceleration.

**16.** Method according to one or more of Claims 1 to 15, **characterized in that**, in undisturbed working operation, the first movable component (12; 16) is braked by a first braking means (43; 45) and **in that**, in the event of a disturbance, it is braked with the aid of an additional braking means (53; 51) with a stronger deceleration in comparison with working operation.

**17.** Method according to one or more of Claims 1 to 16, **characterized in that**, after obtaining the release signal (42; 44), the first movable component (12; 16) is initially accelerated with a lesser acceleration and, after passing a last possible collision-free stopping point (SL), is accelerated with maximum acceleration at least until it enters the path of movement of the second movable component (16; 12).

**18.** Method according to one or more of Claims 1 to 17, **characterized in that** the path of movement (22; 28) of one of the movable components (12; 16) runs approximately vertically, this movable component (12; 16) entering the path of movement (22; 28) of the other component (16; 12) from above, and **in that** this component (12; 16) is secured against falling off in the event of a disturbance by a retaining means.

**19.** Method according to one or more of Claims 1 to 18, **characterized in that** a common control unit (34) is provided for both movable components (12, 16), in which unit the sequences of movements of the two components (12, 16) are directly compared and, in the event of a disturbance, a disturbance signal is generated.

**20.** Plastics injection-moulding machine with a first and a second movable component (12, 16), the paths of movement (22, 28) of which at least partially overlap each other, with a control unit (34) for generating a release signal (42, 44) for the movement of the first movable component (12, 16) in dependence on a state of movement of the second movable component (16, 12) and with means (34, 36, 38) for determining at least one measure of time ($T_{WA}$, $T_{RAmax}$; $T_{RE}$, $T_{WEmax}$), **characterized in that** a first measure of time ($T_{WA}$; $T_{RE}$) indicates a time period between the point in time ($t_{FW}$; $t_{FR}$) of the generation of the release signal and the point in time ($t_6$; $t_3$) at which the first movable component (12; 16) reaches the path of movement (28; 22) of the second movable component (16; 12), **in that** a second measure of time ($T_{RAmax}$; $T_{WEmax}$) indicates a time period between the point in time ($t_{FW}$; $t_{FR}$) of the generation of the release signal and the point in time ($t_{10}$; $t_8$) at which the second movable component (16; 12) leaves the path of movement (22; 28) of the first movable component (12; 16), the release signal (42; 44) being generated at the point in time ($t_{FW}$; $t_{FR}$) at which the second movable component (16; 12) passes a triggering position ($S_{FW}$, $S_{FR}$), and **in that** furthermore the control unit (34) has means to form the difference between the first measure of time ($T_{WA}$; $T_{RE}$) and the second measure of time ($T_{RAmax}$; $T_{WEmax}$) and to generate the release signal (42; 44) in dependence on the difference, with the means for determining the measures of time ($T_{WA}$, $T_{RAmax}$; $T_{RE}$, $T_{WEmax}$) comprising at least one sensor (36, 38).

**21.** Machine according to Claim 20, **characterized in that**, for braking in the event of a disturbance, an external brake is used.

**22.** Machine according to Claim 21, **characterized in that** the external brake is a friction brake.

**23.** Machine according to Claim 21, **characterized in that** the external brake is a shock absorber.

**Revendications**

**1.** Procédé de contrôle du déplacement d'une première partie mobile (12 ; 16) d'une machine de moulage par injection de plastique (10) dont la trajectoire (22 ; 28) est au moins partiellement en recouvrement avec la trajectoire (28 ; 22) d'une deuxième partie mobile (16 ; 12) de la machine de moulage par injection de plastique (10), le déplacement de la première partie mobile (12 ; 16) étant lancé sur réception d'un signal de libération (42 ; 44) correspondant à un état de déplacement de la deuxième partie mobile (16 ; 12), au moins une durée étant déterminée, <u>**caractérisé en ce**</u> **qu'**une première durée ($T_{WA}$; $T_{RE}$) et une deuxième durée ($T_{RAmax}$; $T_{WEmax}$) sont déterminées et comparées entre elles (124, 130 ; 104, 110), la première durée ($T_{WA}$; $T_{RE}$) correspondant au laps de temps entre l'instant ($t_{FW}$; $t_{FR}$) où est émis le signal de libération et l'instant ($t_6$ ; $t_3$) où la première partie mobile (12 ; 16) rejoint la trajectoire (28 ; 22) de la deuxième partie mobile (16 ; 12), la deuxième durée ($T_{RAmax}$ ; $T_{WEmax}$) correspondant au laps de temps entre l'instant ($t_{FW}$ ; $t_{FR}$) où est émis le signal de libération et l'instant ($t_{10}$ ; $t_8$) où la deuxième partie mobile (16 ; 12) quitte la trajectoire (22 ; 28) de la première partie mobile (12 ; 16), et le signal de libération (42 ; 44) étant émis à l'instant ($t_{FW}$ ; $t_{FR}$) où la deuxième partie mobile (16 ; 12) passe par une position de déclenchement ($S_{FW}$ ; $S_{FR}$), et **en ce que** le déplacement (62 ; 72) de la première partie mobile (12 ; 16) est commandé en fonction de la comparaison des deux durées ($T_{WA}$, $T_{RAmax}$ ; $T_{RE}$, $T_{WEmax}$) de sorte que la différence entre la deuxième durée ($T_{RAmax}$ ; $T_{WEmax}$) et la première durée ($T_{WA}$ ; $T_{RE}$) soit inférieure à une valeur de tolérance minimum prédéfinie ($\Delta T_2$ ; $\Delta T_1$), au moins une des deux durées ($T_{WA}$, $T_{RAmax}$ ; $T_{RE}$, $T_{WEmax}$) étant déterminée par un capteur (36, 38).

2. Procédé selon la revendication 1, **caractérisé en ce que** l'une des parties mobiles (12, 16) est un demi-moule (12) pouvant effectuer par rapport à un autre demi-moule (14) un déplacement d'ouverture et de fermeture (56, 57) et **en ce que** l'autre des parties mobiles (12, 16) est un outil de préhension (16) susceptible de s'insérer entre les demi-moules (12, 14) et d'en ressortir (55, 58).

3. Procédé selon la revendication 2, **caractérisé en ce que** la ou les durées ($T_{RAmax}$ ; $T_{RE}$) sont représentatives du déplacement de l'outil de préhension (16).

4. Procédé selon l'une des revendications 1 à 3, **caractérisé en ce qu'**une autre des durées ($T_{WA}$ ; $T_{WEmax}$) est enregistrée comme paramètre dans une unité de contrôle (34) de la machine de moulage par injection de plastique (10).

5. Procédé selon la revendication 4, **caractérisé en ce que** l'autre durée ($T_{WA}$ ; $T_{WEmax}$) est représentative du déplacement du demi-moule (12).

6. Procédé selon l'une ou plusieurs des revendications 1 à 5, **caractérisé en ce qu'**au moins l'une des durées ($T_{RAmax}$; $T_{RE}$) est réglée (108, 112) en modifiant une accélération, une distance à parcourir et/ou un temps d'arrêt ($\Delta t_R$) d'au moins une partie mobile (12, 16).

7. Procédé selon l'une ou plusieurs des revendications 1 à 6, **caractérisé en ce que** le signal de libération (42 ; 44) est émis lorsque la deuxième partie mobile (16 ; 12) atteint une position de déclenchement prédéfinie ($S_{FW}$; $S_{FR}$) et **en ce que** la position de déclenchement est réglée en fonction de la première durée ($T_{WA}$; $T_{RE}$) et de la deuxième durée ($T_{RAmax}$ ; $T_{WEmax}$).

8. Procédé selon l'une ou plusieurs des revendications 1 à 7, **caractérisé en ce que** la deuxième durée ($T_{RAmax}$ ; $T_{WEmax}$) est déterminée par une simulation (122 ; 102) consistant à simuler (76 ; 66) une défaillance d'un mécanisme d'entraînement de la deuxième partie mobile (16 ; 12) à l'instant ($t_{FW}$ ; $t_{FR}$) où est émis le signal de libération (42 ; 44).

9. Procédé selon l'une ou plusieurs des revendications 1 à 8, **caractérisé en ce qu'**un signal d'erreur ($F_R$ ; $F_W$) est émis lorsque le mécanisme d'entraînement (45 ; 43) de la deuxième partie mobile (16 ; 12) tombe en panne et **en ce que** l'existence du signal d'erreur ($F_R$ ; $F_W$) interrompt ou inhibe (78 ; 68) le déplacement de la première partie mobile (12 ; 16).

10. Procédé selon l'une ou plusieurs des revendications 1 à 9, **caractérisé en ce qu'**un signal d'erreur ($F_R$ ; $F_W$) est émis lorsqu'un déplacement (76 ; 66) de la deuxième partie mobile (16 ; 12) sort d'une plage de tolérance prédéfinie (74 ; 64) et **en ce que** l'existence du signal d'erreur ($F_R$ ; $F_W$) interrompt ou inhibe (78 ; 68) le déplacement de la première partie mobile (12 ; 16).

11. Procédé selon la revendication 10, **caractérisé en ce que** la plage de tolérance (74 ; 64) est déterminée de manière empirique, par de multiples passages, avant exploitation de la machine de moulage par injection de plastique (10) dans les conditions de production.

12. Procédé selon la revendication 11, **caractérisé en ce que** la plage de tolérance (74 ; 64) est remesurée et réajustée en conséquence, dans les conditions de production, à des intervalles de temps prédéfinis.

13. Procédé selon l'une ou plusieurs des revendications 1 à 12, **caractérisé en ce que** la détermination (102 ; 122) d'au mois une durée ($T_{WA}$, $T_{RAmax}$ ; $T_{RE}$, $T_{WEmax}$) est effectuée (118 ; 138) à plusieurs reprises au cours du procédé.

**14.** Procédé selon l'une ou plusieurs des revendications 1 à 13, **caractérisé en ce qu'**une tension d'alimentation ($U_V$) pour l'entraînement de la deuxième partie mobile (16 ; 12) est équilibrée à l'aide d'un moyen accumulateur tampon (48 ; 46) de sorte que le mécanisme d'entraînement de la deuxième partie mobile (16 ; 12) soit maintenu en fonctionnement même en cas de coupure de la tension d'alimentation ($U_V$) jusqu'à ce que la deuxième partie mobile (16 ; 12) ait quitté la trajectoire (22 ; 28) de la première partie mobile (12 ; 16).

**15.** Procédé selon l'une ou plusieurs des revendications 1 à 14, **caractérisé en ce que** la première partie mobile (12 ; 16) est freinée avec une décélération maximale en cas d'incident lors du déplacement de la deuxième partie mobile (16 ; 12).

**16.** Procédé selon l'une ou plusieurs des revendications 1 à 15, **caractérisé en ce qu'**en fonctionnement sans incident la première partie mobile (12 ; 16) est freinée par un premier moyen de freinage (43 ; 45) et **en ce que**, en cas d'incident, le freinage s'effectue à l'aide d'un moyen de freinage supplémentaire (53 ; 51) avec une décélération plus forte qu'en cas de fonctionnement normal.

**17.** Procédé selon l'une ou plusieurs des revendications 1 à 16, **caractérisé en ce que** sur réception du signal de libération (42 ; 44) la première partie mobile (12 ; 16) est tout d'abord accélérée avec une accélération relativement faible et, après être passée par un dernier point d'arrêt possible sans risque de collision (SL), elle est accélérée avec une accélération maximale au moins jusqu'à ce qu'elle rejoigne la trajectoire de la deuxième partie mobile (16 ; 12).

**18.** Procédé selon l'une ou plusieurs des revendications 1 à 17, **caractérisé en ce que** la trajectoire (22 ; 28) de l'une des parties mobiles (12 ; 16) est sensiblement verticale, cette partie mobile (12 ; 16) pénétrant par le haut dans la trajectoire (22 ; 28) de l'autre partie (16 ; 12), et **en ce qu'**un moyen de maintien empêche cette partie (12 ; 16) de tomber en cas d'incident.

**19.** Procédé selon l'une ou plusieurs des revendications 1 à 18, **caractérisé en ce qu'**il est prévu une unité de contrôle (34) commune aux deux parties mobiles (12, 16), où sont immédiatement comparés les déplacements des deux parties (12, 16) et où un signal d'incident est émis en cas d'incident.

**20.** Machine de moulage par injection de plastique comportant une première et une deuxième parties mobiles (12, 16) dont les trajectoires (22, 28) se recouvrent au moins partiellement, une unité de contrôle (34) destinée à émettre un signal de libération (42, 44) pour le déplacement de la première partie mobile (12, 16) en fonction d'un état de déplacement de la deuxième partie mobile (16, 12), et des moyens (34, 36, 38) permettant de déterminer au moins une durée ($T_{WA}$, $T_{RAmax}$; $T_{RE}$, $T_{WEmax}$), **caractérisée en ce qu'**une première durée ($T_{WA}$; $T_{RE}$) correspond au laps de temps entre l'instant ($t_{FW}$; $t_{FR}$) où est émis le signal de libération et l'instant ($t_6$; $t_3$) où la première partie mobile (12 ; 16) rejoint la trajectoire de la deuxième partie mobile (16 ; 12), **en ce qu'**une deuxième durée ($T_{RAmax}$ ; $T_{WEmax}$) correspond au laps de temps entre l'instant ($t_{FW}$ ; $t_{FR}$) où est émis le signal de libération et l'instant ($t_{10}$ ; $t_8$) où la deuxième partie mobile (16 ; 12) quitte la trajectoire (22 ; 28) de la première partie mobile (12 ; 16), le signal de libération (42 ; 44) étant émis à l'instant ($t_{FW}$; $t_{FR}$) où la deuxième partie mobile (16 ; 12) passe par une position de déclenchement ($S_{FW}$; $S_{FR}$) et **en ce que**, en outre, l'unité de contrôle (34) comporte des moyens pour déterminer la différence entre la première durée ($T_{WA}$; $T_{RE}$) et la deuxième durée ($T_{RAmax}$; $T_{WEmax}$) et pour émettre le signal de libération (42 ; 44) en fonction de cette différence, les moyens permettant de déterminer les durées ($T_{WA}$, $T_{RAmax}$ ; $T_{RE}$, $T_{WEmax}$) comportant au moins un capteur (36, 38).

**21.** Machine selon la revendication 20, **caractérisée en ce qu'**elle utilise un frein externe pour assurer le freinage en cas d'incident.

**22.** Machine selon la revendication 21, **caractérisée en ce que** le frein externe est un frein à friction.

**23.** Machine selon la revendication 21, **caractérisée en ce que** le frein externe est un amortisseur de chocs.

Fig.1

Fig. 2

Fig.3

Fig.4

Fig. 5

Fig. 6

Fig. 7